# EUROPEAN PATENT SPECIFICATION

(11) **EP 1 899 973 B1**
(45) Date of publication and mention of the grant of the patent: **13.10.2010**
(21) Application number: 06744241.8
(22) Date of filing: 16.06.2006
(51) Int. Cl.: G11B 33/04

(54) **APPARATUS FOR HOLDING A DISK**
VORRICHTUNG ZUM HALTEN EINER SCHEIBE
APPAREIL PERMETTANT DE MAINTENIR UN DISQUE

(30) Priority: 17.06.2005 GB 0512357; 22.12.2005 GB 0526094
(43) Date of publication of application: 19.03.2008
(73) Proprietor: AGI Media Packaging Europe Limited, Drayton Chichester West Sussex PO20 6EW (GB)
(72) Inventor: FRASER, Anthony Henry Joseph, Rutland PE9 3RD (GB); FARRAR, Peter Antony, Menston, Leeds LS29 6EX (GB); HEWLETT, Timothy, Menston, Leeds LS29 6EX (GB)
(74) Representative: Coulson, Elizabeth Eve
(86) International application number: PCT/GB2006/002215
(87) International publication number: WO 2006/134383

(56) References cited:
- EP-A- 0 676 763
- EP-A- 1 189 233
- WO-A-95/26917
- WO-A-03/058627
- WO-A-2006/005851
- GB-A- 2 312 203
- GB-A- 2 336 582
- US-A- 5 611 426
- US-A- 5 791 468
- US-A1- 2004 079 656

## Description

### TECHNICAL FIELD

The invention relates to apparatus for holding a disk, for example a CD (compact disk) or DVD (digital versatile disk).

### BACKGROUND ART

Many types of apparatus for holding a disk via a central aperture therein are known. Many types of apparatus in which a disk is held by retaining members at its periphery are also known. Such retaining members are designed to retain the disk in an axial direction, i.e. in a direction perpendicular to the plane of the disk, until the disk is released therefrom and lifted from the apparatus in an axial direction. Such arrangements have many advantages but the present invention seeks to provide an alternative way of holding a disk so as to provide product designers with a wider range of options.

WO03/058627 discloses a device for packaging substantially platelike information carriers provided with a first part and second cover part wherein at least one of the cover parts is provided with receiving means for engaging and locking at least one information carrier which receiving means comprise guide elements which can guide and lock a portion of an outer edge of the information carrier wherein the information carrier can be slid into or under the guide elements and can be removed from the package by sliding parallel to its surface.

### SUMMARY OF INVENTION

According to a first aspect of the invention, tOhere is provided apparatus for holding a disk, the apparatus comprising a substantially rigid holding portion having one or more overlapping portions which comprise one or more lips for overlapping the upper surface of the disk and/or a slot for receiving a peripheral portion of the disk, the periphery of a disk being receivable beneath the overlapping portions so as to inhibit removal of the disk from the apparatus in a direction substantially perpendicular to the plane of the disk, the disk being disengageable from said overlapping portions by sliding the disk in a direction substantially parallel to the plane of the disk, the apparatus also comprising a pair of restraining portions or projections which are spaced apart by a distance less than the diameter of the disk, the arrangement being such that disengagement of the disk from the overlapping portion, by sliding of the disk in a direction substantially parallel to the plane of the disk out from beneath said overlapping portions, requires the disk to be flexed so as to disengage it from the restraining portions and/or requires one of the restraining portions to be pivoted in a direction substantially perpendicular to the plane of the disk away from an edge of the disk.

Preferably, the overlapping portions retain the disk in the manner of a pocket. Preferably, the disk has to be slid in a direction substantially parallel to the plane of the disk by at least 5mm, preferably by at least 10mm and most preferably by at least 20mm before it is free to be lifted out of the apparatus. This is in contrast to prior art in which a very small lateral movement of the disk is used to release It from peripheral retaining means before the disk can be axially removed.

The holding portion may be in the form of a plastics tray.

The retaining portion may comprise a locking device which, In a closed position, prevents a disk sliding out from beneath the overlying portions. The locking device may be pivotably mounted to the tray.

The locking device preferably comprises a flap pivotably mounted on the holding portion. In the closed positions, parts of the flap are arranged so as to be adjacent the peripheral edge of a disk to prevent the disk sliding out from beneath the overlapping portion and overlie the periphery of the disk to inhibit movement In a direction substantially perpendicular to the plane of the disk. Preferably, the flap interacts with two disks in this manner. If desired, a similar flap may be provided on the opposite side of the tray.

The apparatus is preferably provided with a ramp which an edge of the disk slides up as the disk slides out from beneath the overlying portions.

The or each disk is preferably located within a recess and supported only at its periphery by an inclined wall around the edge of the recess.

A preferred embodiment is arranged such that disengagement of the disk from said restraining portions or projections to permit sliding out of the disk can be achieved predominantly, or only, by flexing of the disk.

Another preferred embodiment is arranged such that disengagement of the disk from said restraining portions or projections to permit sliding out of the disk also involves flexing of said restraining portions or projections.

In another preferred embodiment, the arrangement is such that the disk can be Installed beneath the overlapping portions by moving it towards the apparatus in a direction substantially perpendicular to the plane of the disk whereas disengagement of the disk from the apparatus requires the disk to be slid In a direction substantially parallel to the plane of the disk.

The above arrangement enables the disk to be installed by pressing it axially towards the apparatus. This makes the apparatus easier to load in a manufacturing process. It also reduces the risk that the apparatus will be damaged if a user chooses to replace a disk by pressing It In axially rather than sliding it beneath the overlapping portions. Nevertheless, the disk still needs to be slid sideways In order to release it from the apparatus.

In a preferred embodiment, the arrangement is such that, when retained in the apparatus, the disk can be flexed by means of a force applied thereto in a direction substantially perpendicular to the plane of the disk, whereby the distance between peripheral portions of the disk lying under said at least two overlapping portions is reduced, thereby facilitating removal of the disk by sliding the disk in a direction substantially parallel to the plane of the disk.

The overlapping portions may comprise one or more lips for overlapping the upper surface of the disk and/or a slot for receiving a peripheral portion of the disk. The overlapping portions may also comprise restraining portions between which the disk is restrained. The overlapping portions are preferably provided continuously or intermittently around at least 180 degrees of the periphery of the disk but preferably less than 210 degrees of the periphery of the disk. The overlapping portions preferably cover or conceal only peripheral areas of the disk, e.g. up to 5mm from the edge of the disk, and preferably only up to 3mm from the edge of the disk.

In a preferred arrangement, the apparatus comprises two pairs of overlapping portions, a first pair which are angularly spaced from each other by 120 degrees or less, and preferably 90 degrees or less, relative to the centre of a disk (when retained in the apparatus), and a second pair which are angularly spaced from each other by more than 120 degrees, and preferably greater than 180 degrees (e.g. between 190 and 210 degrees), relative to the centre of a disk retained in the apparatus.

Preferably, the overlapping portions are arranged such that the first pair only overlap the periphery of the disk during the initial movement of the disk as it is slid out of the apparatus, e.g. during the first 2-5mm of this movement, whereas the second pair overlap the disk during a greater portion of the movement of the disk, e.g. over 20-25mm of its movement (i.e. from its retained position to a position 20-25mm therefrom). In a preferred arrangement, the extent (e.g. along the length of the circumference of the disk) of the overlap between the second pair and the disk initially increases as the disk is slid out and then decreases as the disk is slid further out.

The apparatus may be arranged to hold two or more disks, and preferably the disks at least partially overlap with each other.

In a preferred embodiment, the apparatus holds two disks. The apparatus may be arranged such that the two disks slide out in substantially opposite directions or in the same direction. Preferably, the arrangement is such that as one disk is slid out of the apparatus its edges travel along ramps so that it is moved away from the other disk to avoid or reduce the risk of scraping against the other disk.

In another embodiment, the apparatus holds two or more disk, the disks being held substantially parallel to each other but with each disk being inclined to the horizontal, e.g. by between 5 and 10 degrees.

In a further arrangement, one of the disks is retained in the manner described above so it has to be slid out in a direction substantially parallel to the plane of the disk whereas a second disk is retained on the apparatus by holding means which engages the disk via a central aperture of the disk. As indicated above, many types of such holding means are known and may be used.

When two or more disks are held on the apparatus, the disks may be of different types and/or different sizes. One may, for example, be a CD or DVD with a diameter of approximately 120mm and the other a mini disk with a diameter of about 80mm.

The holding portion may be mounted to a cardboard cover. Alternatively, it may be mounted within a container or may be integrally formed with the base portion and/or lid portion of a container.

Further preferred and optional features of the invention will be apparent from the following description.

### BRIEF DESCRIPTION OF DRAWINGS

The invention will now be further described, merely by way of example, with reference to the accompanying drawings in which:
Figure 1 is a perspective view of a first embodiment of the present invention for holding two disks (partially overlapping);
Figure 2 is a perspective view of the apparatus shown in Figure 1 with two disks shown mounted therein;
Figure 3 is a perspective view illustrating how the first disk is removed from the apparatus;
Figure 4 is a perspective view illustrating how the second disk is removed from the apparatus;
Figure 5 shows an enlarged view of a locking device (in the closed position) of the first embodiment;
Figure 6 shows an enlarged view of the locking device (in the open position) of Figure 5 following removal of the disks;
Figure 7 is a perspective view of a second embodiment of the present invention with two disks shown mounted therein;
Figure 8 is a schematic cross-sectional view of the apparatus and disks shown in Figure 6;
Figure 9 is a plan view of the second embodiment;
Figure 10 is a perspective view of the second embodiment (without disks therein);
Figure 11 is a perspective view of the second embodiment from the other end (with two disks shown held therein);
Figure 12 is a perspective view of the second embodiment illustrating how the first disk is removed;
Figure 13 is a perspective view of the second embodiment illustrating how the second disk is removed;
Figure 14 is an enlarged view of a locking device (in the closed position) of the second embodiment;
Figure 15 is an enlarged view of the locking device (in the open position) of Figure 14 following removal of the disks;
Figure 16 is a plan view of a third embodiment of apparatus according to the invention;
Figure 17 is a plan view of the apparatus shown in Figure 16 with disks mounted therein;
Figures 18-20 illustrate three positions of a first disk during its removal from the apparatus;
Figures 21-24 are perspective views of the apparatus corresponding, respectively, to Figures 17-20;
Figure 25 is a perspective view showing removal of the first disk after it has reached the position shown in Figure 24;
Figure 26 is a sectional view taken along line A-A of Figure 17;
Figure 27 is a perspective view cut-away along the line A-A of Figure 17;
Figure 28 is a perspective view similar to Figure 27 but showing the first disk partially removed (in a position corresponding to that of Figures 19 and 23);
Figure 29 is a perspective view illustrating how a disk may be pressed into the apparatus (rather than being slid in);
Figures 30 and 31 are perspective and front close up views, respectively, of overlapping portions on one side of the apparatus;
Figure 32 is an enlarged perspective view of one of the overlapping portions shown in Figures 30 and 31;
Figures 33A and 33B, show perspective views (with and without disks mounted therein) of a fourth embodiment of apparatus according to the invention;
Figures 34A and 34B show plan views (with and without disks mounted therein) of the fourth embodiment;
Figures 35A and 35B show enlarged perspective views (with and without disks mounted therein) of a detail of the fourth embodiment;
Figures 36A and 36B show perspective sectional views (with and without disks mounted therein) of the fourth embodiment, the section being taken along the centre line C-C shown in Figure 33B; and
Figures 37A and 37B show a side view (with and without disks mounted therein) of the sections shown in Figures 36A and 36B.

### DESCRIPTION OF PREFERRED EMBODIMENTS

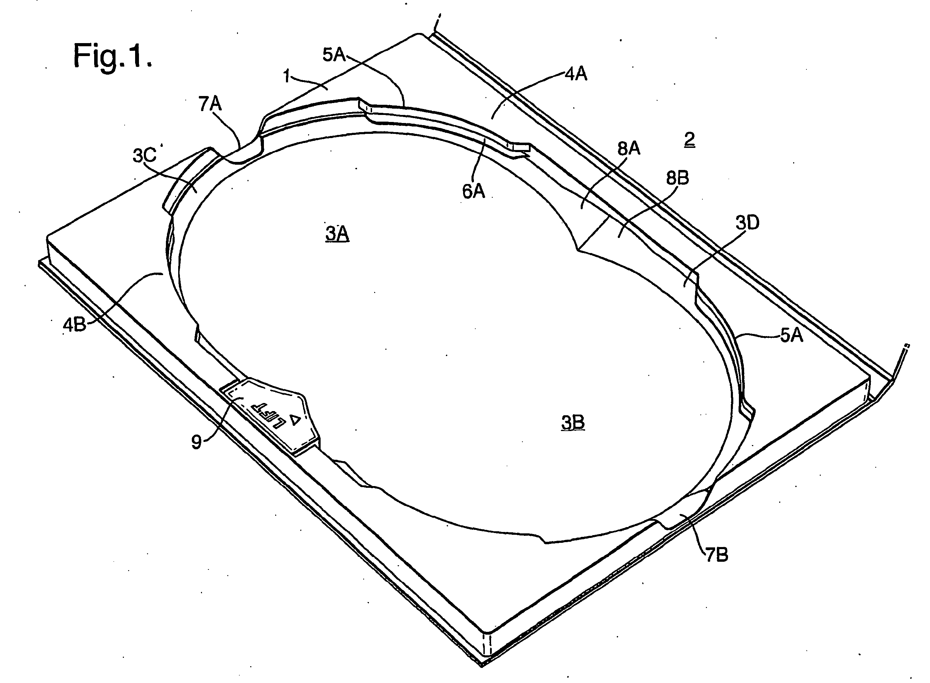

Figure 1 shows apparatus comprising a tray 1 mounted within a cardboard cover 2. The tray 1 is formed of a relatively rigid plastics material, e.g. by an injection moulding process, and secured to the cover 2, e.g. by adhesive.

The tray 1 has a recess formed therein comprising a first area 3A for receiving a first disk and a second area 3B for receiving a second disk, the first and second areas overlapping to some extent so that disks mounted therein overlap so as to be offset from each other. Inclined walls 3C, 3D are provided around the edges of the recess for supporting the disks at their periphery.

Unlike most of the prior art, the tray is not provided with a hub or other engagement means for engaging a central aperture of the disk. Instead, each area is provided with one or more overlying portions 4A, 4B, 5A, 5B beneath which the periphery of a disk can be received.

The overlying portions 4A, 4B, 5A, 5B, may be partially provided by means of projecting lips, such as shown at 5A, together with a slot, such as shown at 6A. Alternatively, just a projecting lip may be provided (for overlapping the upper surface of the disk) or just a slot (for receiving a peripheral portion of the disk).

In the arrangement shown, two overlying portions are provided for each disk, each extending approximately 40 degrees around the circumference of the disk. Alternatively, a single overlying portion may be provided extending a greater extent around the periphery of the disk or a greater number of smaller overlying portions may be provided. In a preferred arrangement, the overlying portions are arranged such that the disk can only be slid out from beneath the portion by sliding movement substantially in a given direction. Preferably, the overlying portions are arranged such that the disk must be slid in a direction parallel to its plane by at least 5mm and preferably at least 10mm before it can be lifted away from the tray 1. The overlying portions thus retain the disk in the manner of a pocket from which the disk has to be slid before it can be removed.

Figure 1 also shows cut-outs 7A and 7B which provides access to the edges of the disks at the ends of the tray 1. It also shows ramps 8A and 8B and a locking device 9 the function of which will be described further below.

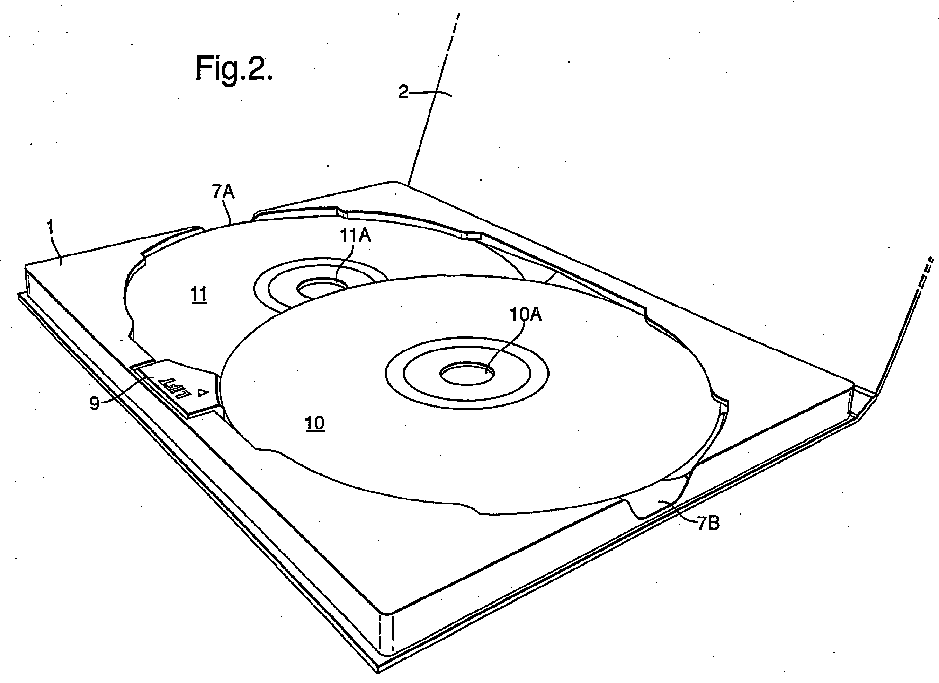

Figure 2 shows the apparatus of Figure 1 with two disks 10 and 11 mounted therein. As shown, the disks partially overlap each other so that their central apertures 10A, 11A are offset. The disks need not overlap but by doing so it is possible to reduce the size of the tray. The disks are supported by the Inclined walls 3C, 3D so that the recorded side (the underside) of one disk is spaced from the other disk so as to reduce the risk of one disk scratching the other. The degree of overlap can be varied to suit the requirements of the product. It is desirable that the central aperture of each disk is accessible (to assist in handling the disk) but this is not essential.

Figure 2 shows the locking device 9 in a closed position in which it prevents the disks from sliding out of their respective pockets.

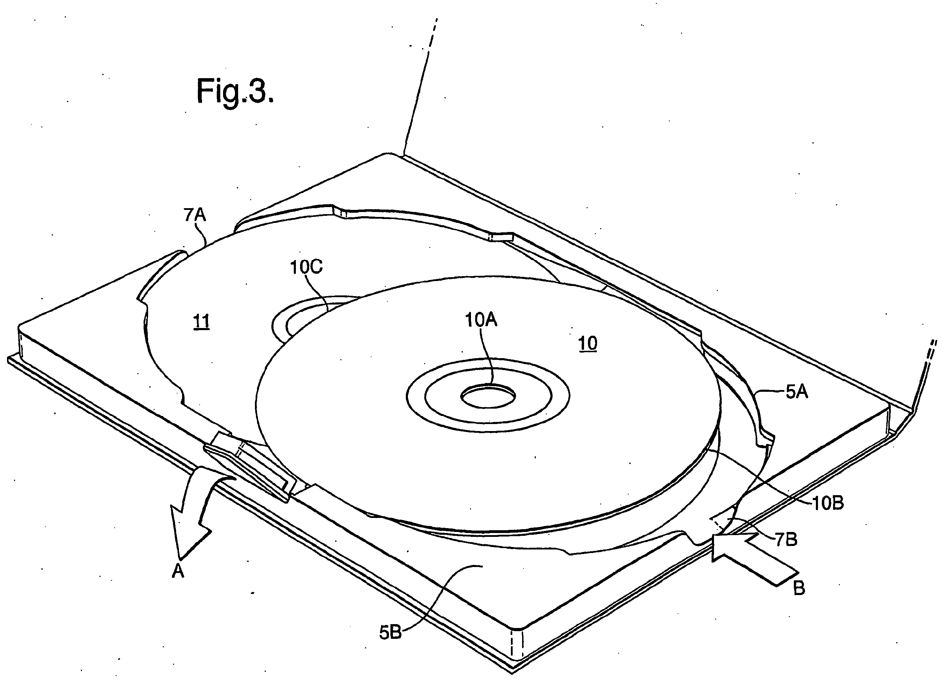

Figure 3 illustrates how disk 10 is removed. The locking device 9 is first pivoted outwards as shown by arrow A so it no longer lies adjacent the edges of the disks, disk 10 is then slid in the direction shown by arrow B by a distance of at least 10mm until it is slid out from beneath the overlying portion 5A, 5B. Towards the end of this sliding movement, the edge of the disk 10 rises up ramp 8B so that it is more accessible to a user's fingers. The disk 10 can then be lifted away from the tray 1.

By providing cut-out 7B in the centre of the end of the tray, it provides access to the trailing edge 10B of disk 10. Thus, a user may grasp the disk 10 at the central aperture 10A and the trailing edge 10B to slide the disk 10 in direction B.

This is preferable to grasping the disk via its leading edge 10C and the central aperture 10A as a finger in the region of the leading edge 10C may scratch the second disk 11 and/or be caught between the leading edge 10C of one disk and the central aperture 11A of the other disk. The movement of disk 10 up the ramp 8B is also preferably arranged so this increases the spacing between the disks 10 and 11 as the central aperture 10A of the first disk passes over the trailing edge 11C of the second disk to reduce the risk of a user's finger being caught between aperture 10A and edge 11C.

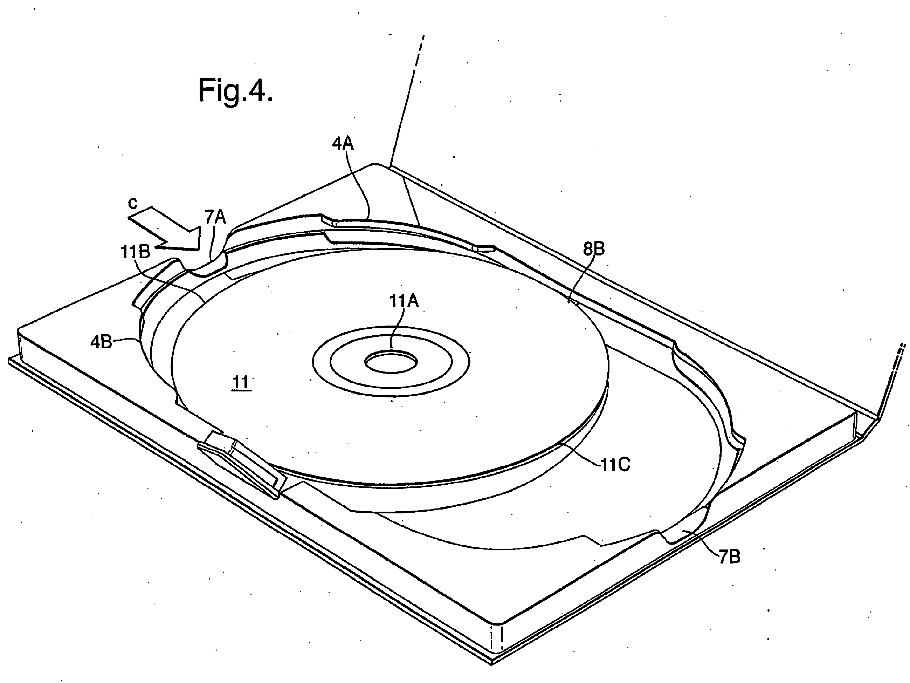

Figure 4 illustrates how disk 11 is removed. With the locking device 9 in the open position, the disk 11 is slid in the direction shown by arrow C by a distance of at least 10mm until it is slid out from beneath the overlying portions 4A, 4B. Towards the end of this sliding movement, the edge of the disk 11 rises up ramp 8B so that it is more accessible to a user's fingers. The disk 11 can then be lifted away from the tray 1. The disk 11 may be grasped at its central aperture 11A and trailing edge 11B to slide it in direction C (although it may instead be grasped via its leading edge 11C and aperture 11A).

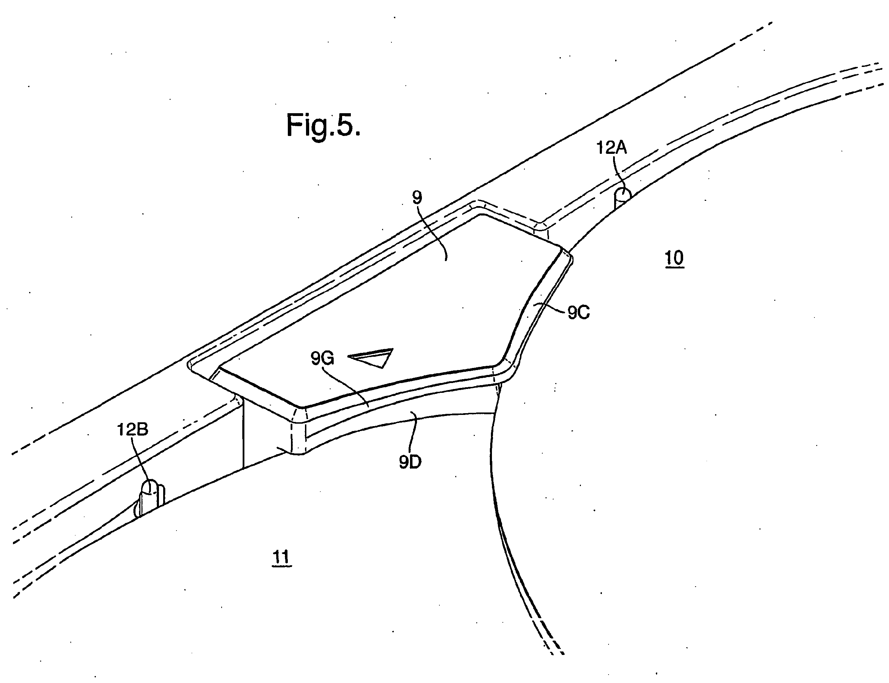

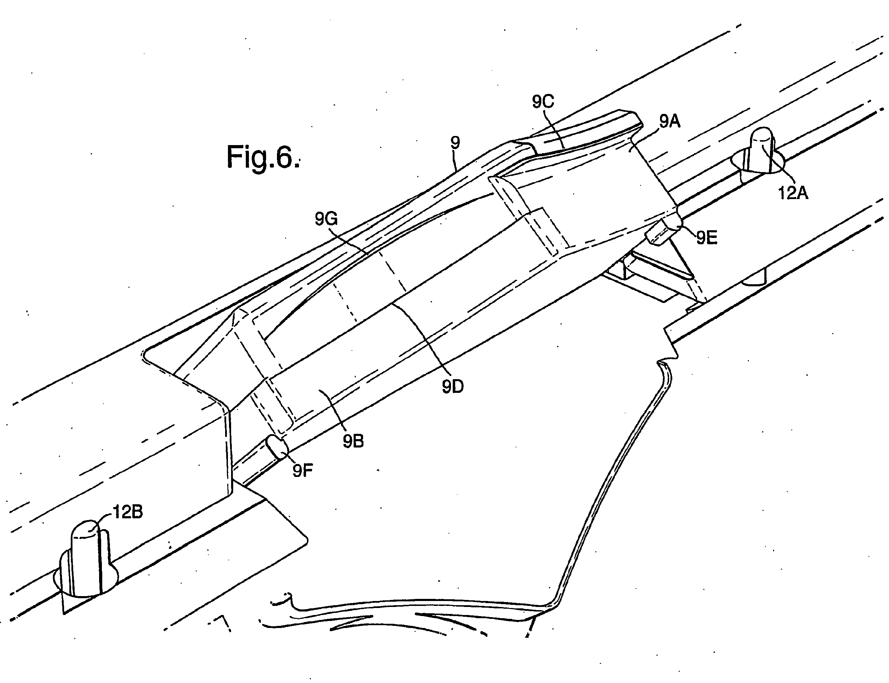

Figures 5 and 6 show enlarged views of the locking device 9 in the closed position and open position. In the closed position, surfaces 9A and 9B (see Fig 6) lie adjacent the edges of disks 10 and 11, respectively, to prevent them sliding out of their pockets in the directions B and C. In addition, in the closed position, shoulders 9C and 9D overlie the disks 10 and 11, respectively, to assist in preventing the disks being dislodged from their pockets.

The locking device is also provided with projections 9E, 9F which snap-fit with features in the tray 1 to hold the device 9 in the closed position. A finger groove 9G assists a user to pull the device to the open position shown in Figure 6.

Figures 5 and 6 also show projections 12A, 12B which the disks 10, 11 bump over as they are inserted into the pockets. These ensure the disks are not loose within the pockets but the resistance they provide can be easily overcome by a user when sliding the disk from the pocket.

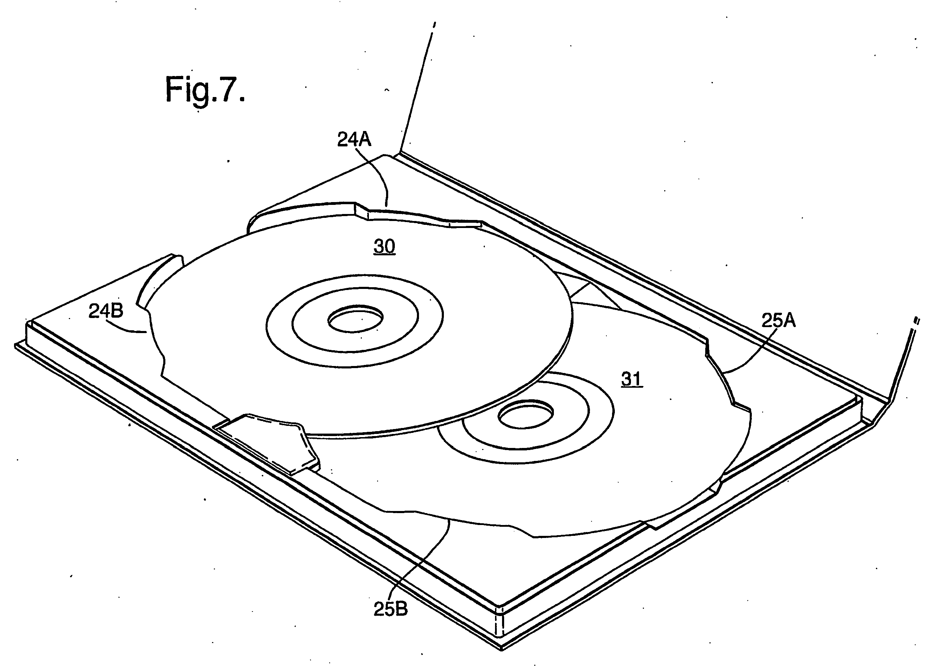

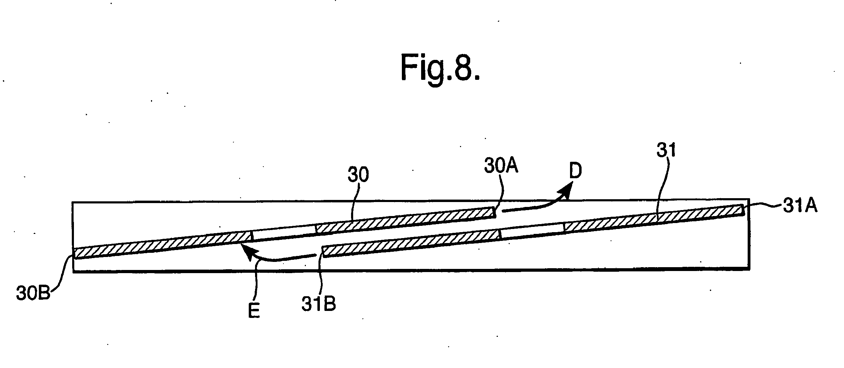

Figure 7 is a perspective view of a second embodiment of the invention. This is similar to the first embodiment except that the disks 30, 31 are botch slightly inclined, typically by 5 - 10 degrees, to the horizontal (see Fig 8). As shown in the cross-section of Figure 8, the disks 30 and 31 are parallel to each other but the upper edge 30A, 31A of each disk is at the same level and, similarly, the lower edge 30B, 31B of each disk is at the same level. The disks 30 and 31 are arranged so that disk 30 is slid out of its pocket in direction D and disk 31 is slid out of its pocket in direction E. This embodiment is thus similar to that described above except that the inclined walls supporting the edges of the disks are formed so as to support the disks at the required inclination. Other features such as the lips 24A, 24B, 25A, 25B are also inclined as appropriate.

In a further arrangement, the disks may both be slid out in the same direction D. In this case, the arrangement can be extended to hold three or more disks. As each disk is inclined and thus lies at the same level with the container as the other disks, additional disks can be held in the apparatus without increasing the thickness (depth) of the tray. An embodiment incorporating such features will be described further below.

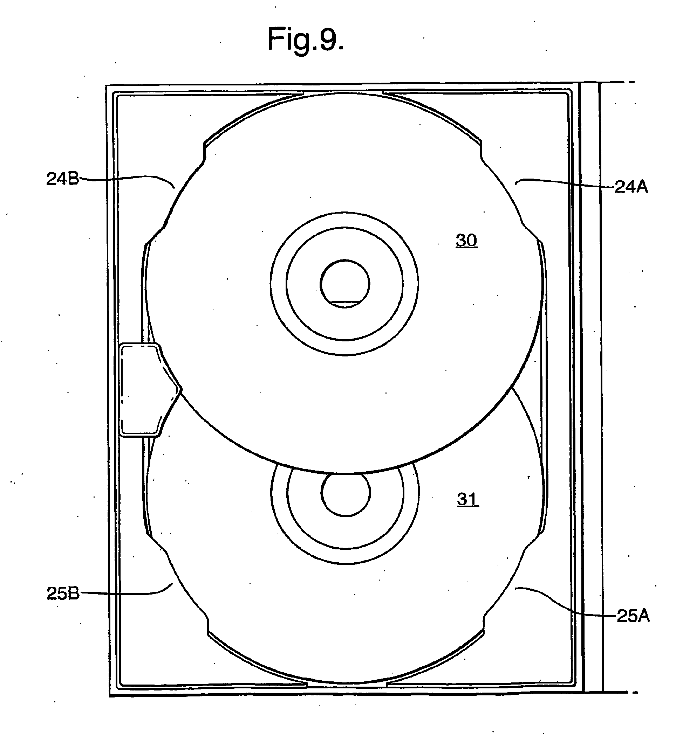

Figure 9 shows a plan view of disks 30 and 31 held in the apparatus described above and shows more clearly how the lips of the overlying portions 24A, 24B, 25A and 25B extend over peripheral portions of the disks 30 and 31. It will be appreciated that the majority of the upper surface (which typically carries graphics related to the data stored on the disk) of disk 30 remains visible as well as a large proportion of the upper surface of disk 31.

The plan view of the embodiments shown in Figures 1- 6 will, of course, be very similar to that shown in Figure 9.

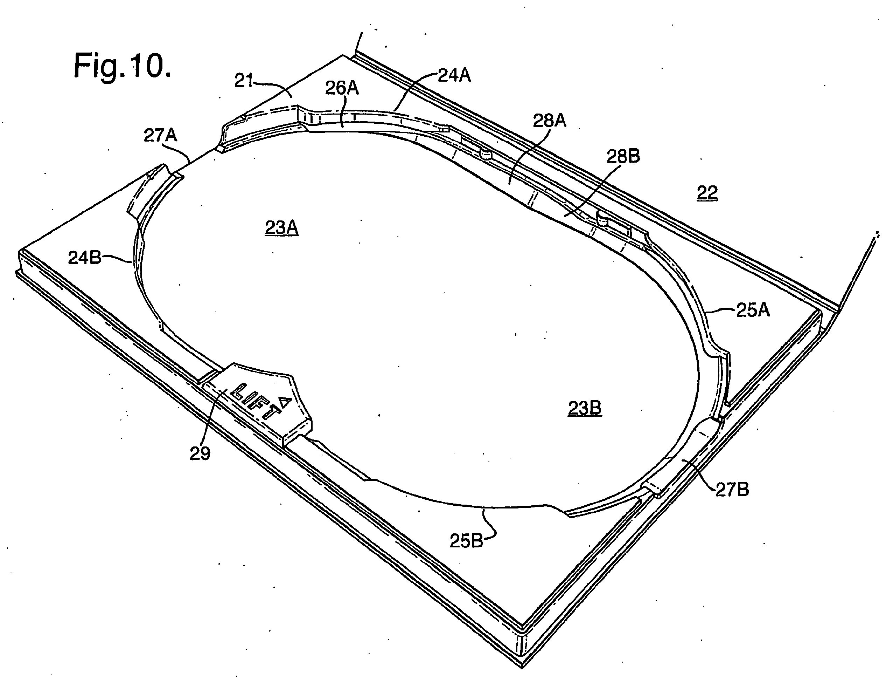

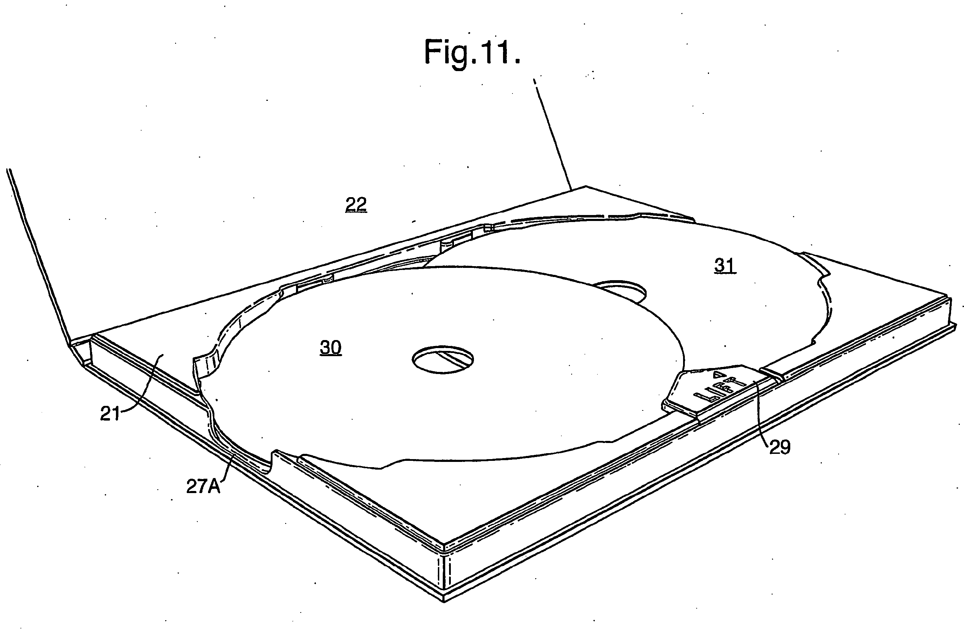

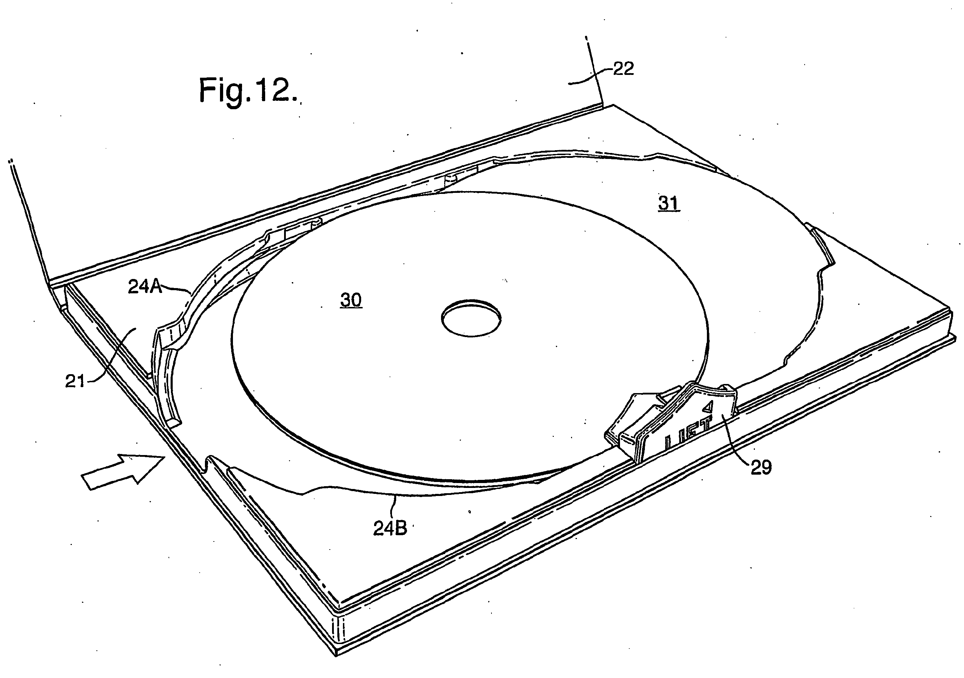

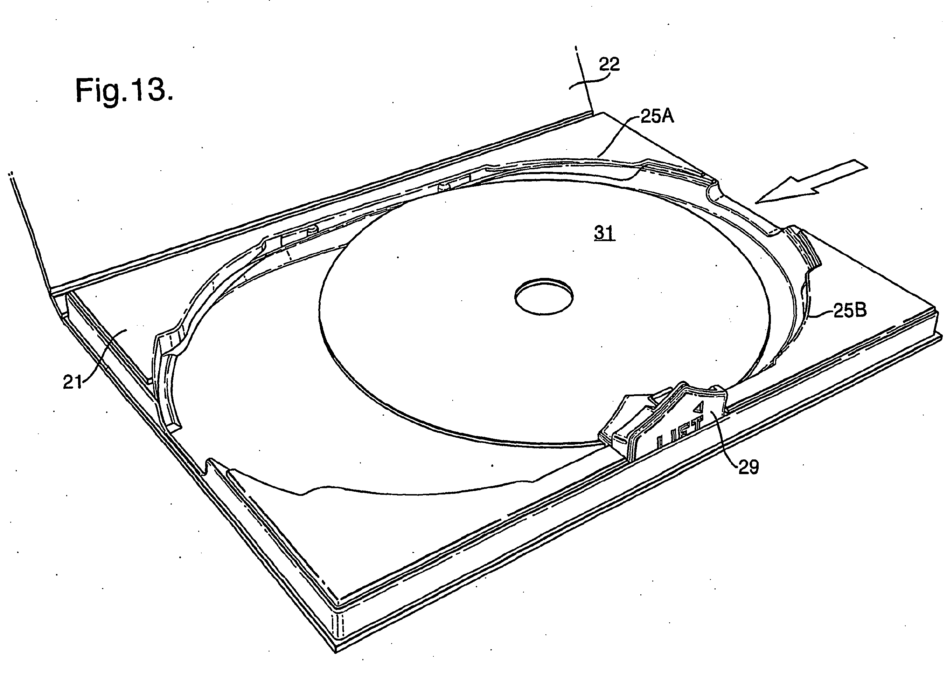

Figures 10-15 show further views of the second embodiment with parts corresponding to those of the first embodiment shown with reference numerals increased by 20.

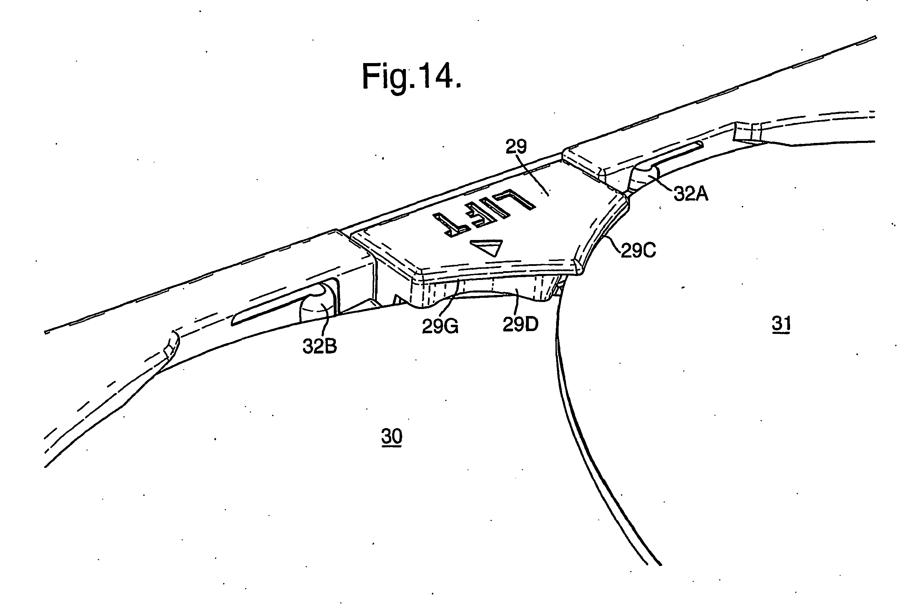

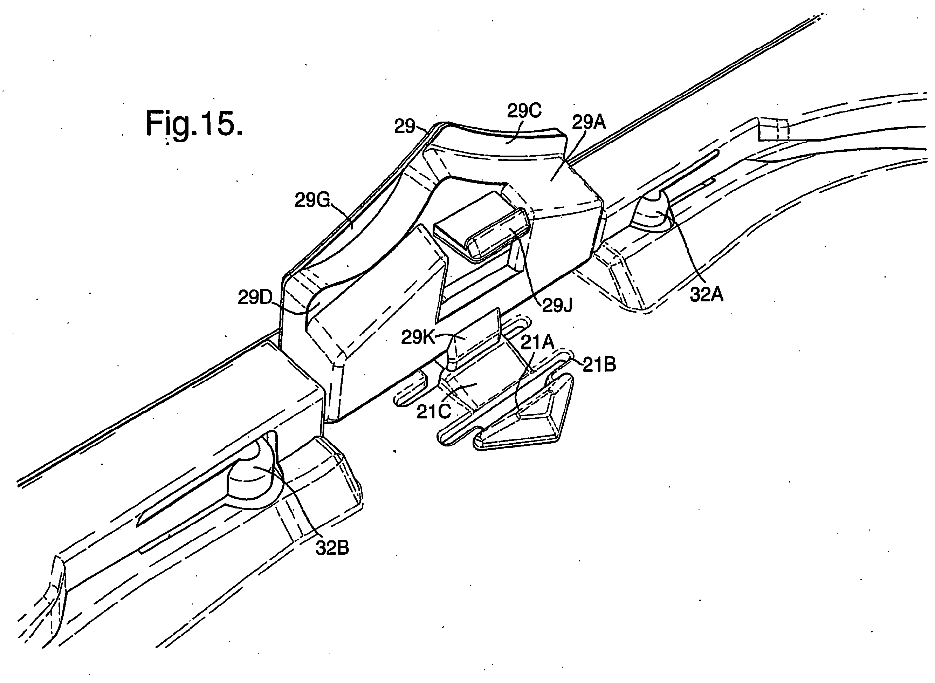

The projections 32A and 32B shown in Figures 14 and 15 are slightly different to those of the first embodiment in that the projections 32A and 32B are provided at the end of resilient arms attached at the other end to the tray 21.

Locking device 29 is also slightly different as the shoulder 29A has a different shape. Also, in place of projections 9F, the device is provided with resilient detent 29J that snaps past a projection 21A into a slot 21B in the tray 21. Furthermore, the device 29 is provided with an arm 29K which snaps past a projection 21 C on the tray as it is opened and closed so once moved to the open position it remains in this position until snapped back over the projection 21C.

Whilst the embodiment described above holds two or more disks, it will be appreciated that a single disk can be held in a similar manner.

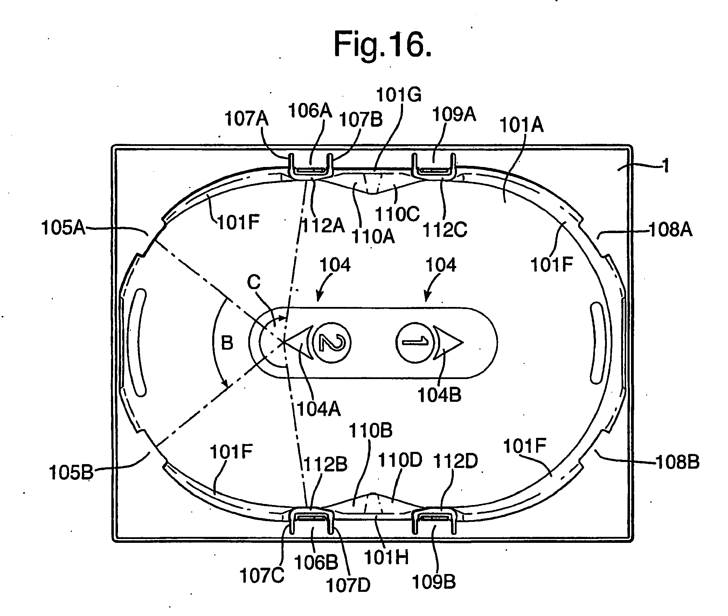

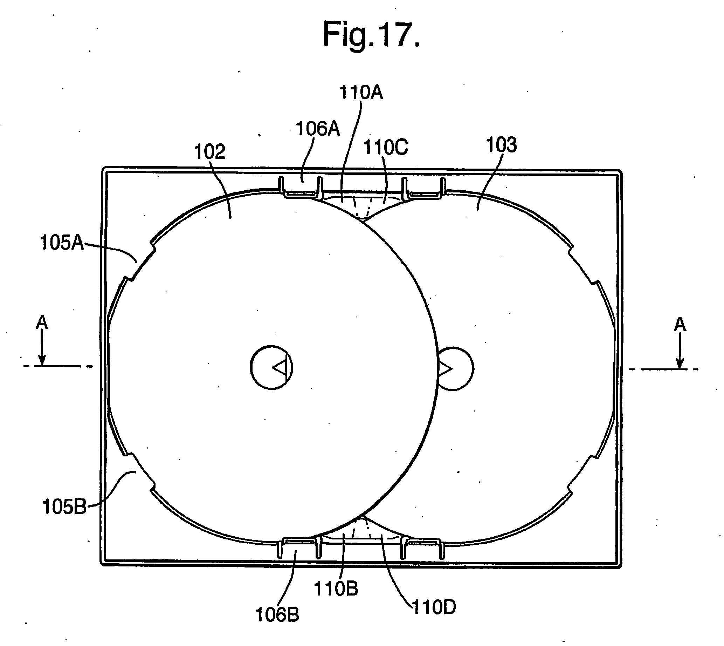

Figures 16-32 illustrate a third embodiment of the invention. Figure 16 shows apparatus comprising a holding portion in the form of a plastics tray 101 with an elongate recess 101A therein for receiving first and second disks 102, 103 (see Figure 17).

The centre of the recess 101A is provided with graphics 104 to instruct a user to slide a first disk in the direction of arrow 104B and to slide a second disk in the direction of arrow 104A. Once the disks 102, 103 are installed in the recess 101A in the positions shown in Figures 2 and 6, the disks 102, 103 are centred over the tips of arrows 104A and 104B, respectively. The width of the recess 101A between opposite sides 101G and 101H thereof is similar to (but just greater than) the diameter of the disks 102, 103 to be held therein.

The tray 101 is provided with a plurality of overlapping portions under which the periphery of the disks lie whilst the disks are held in the tray. Disk 102 is, for example, retained by a first pair of restraining portions or projections 105A, 105B and by a second pair of restraining portions or projections 106A, 106B.

The periphery of the disk engages and is supported by an inclined wall or ledge 101F provided around the periphery of the recess 101A.

The first pair of projections 105A, 105B comprise substantially rigid portions of the tray 101 which project over the periphery of the disk 102. The projections 105A, 105B are angularly spaced from each other (relative to the centre of disk 102) by an angle of 120 degrees or less and preferably 90 degrees or less. In the illustrated embodiment, the angular spacing B is approximately 75 degree. For apparatus designed to hold a CD or DVD, the projections 105A, 105B typically project over the periphery of the disk 102 by 2-3mm and each extend about 10-15mm around the periphery of the disk 102.

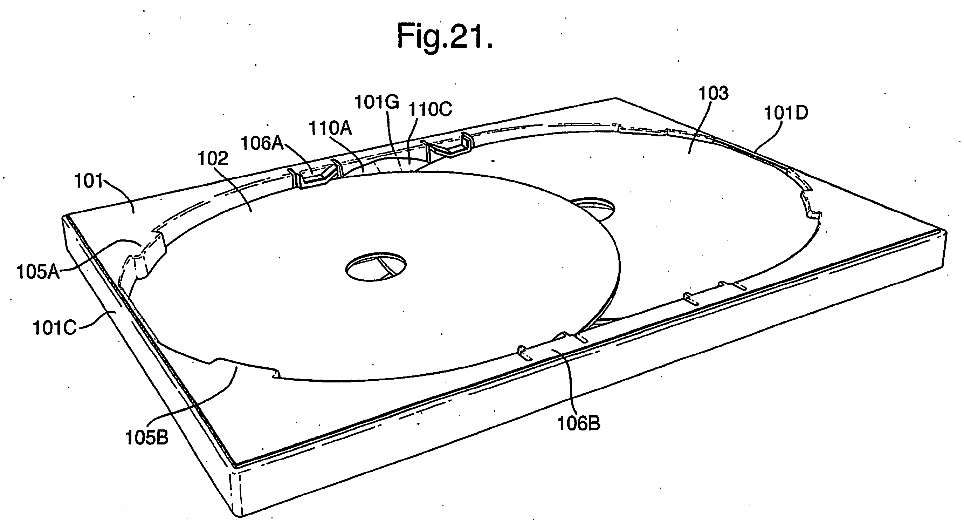

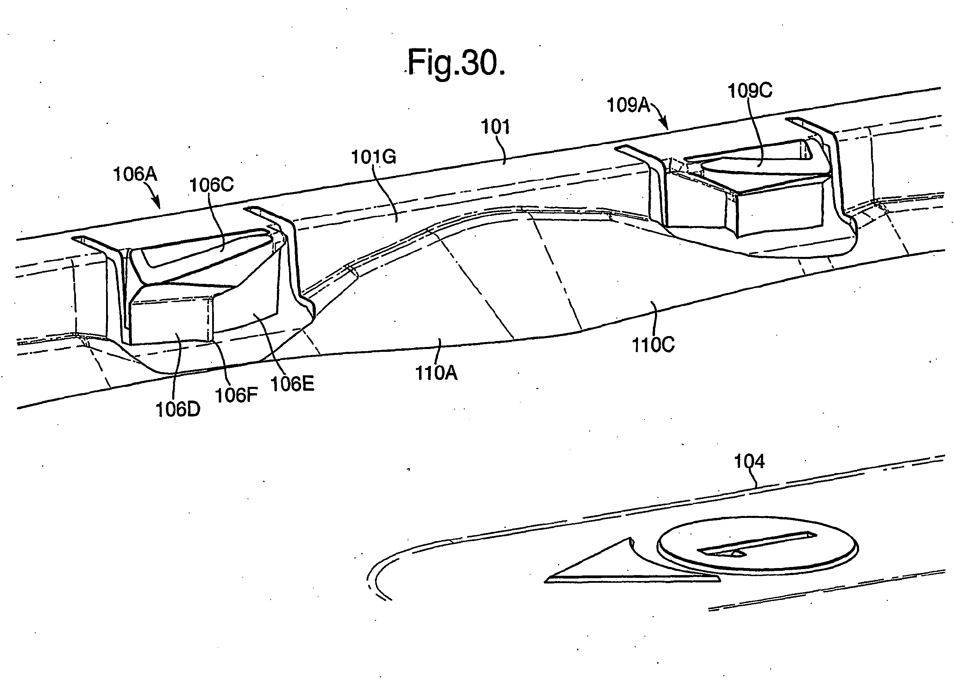

The second pair of projections 106A, 106B comprises resilient portions of the tray 101 which also project over the periphery of the disk 102. The projections 106A, 106B are angularly spaced from each other (relative to the centre of disk 102) by an angle of greater than 120 degrees, and preferably greater than 180 degrees. In the illustrated embodiment the angular spacing C is approximately 200 degrees. Slots 107A, 107B, 107C, 107D are provided in the tray 101 either side of the projections 106A, 106B to provide them with some resilience whereby the linear spacing between the projections 106A and 106B can be increased slightly, e.g. by 0.5-2mm. Each of the projections 106A, 106B may flex by virtue of a bowing outwards of the projection 106A and/or that part of the tray 101 and/or by flexing of the projection 106A downwards relative to the remainder of the tray 101. Each projection 106A, 106B may typically have a length of about 10-15mm (between the slots) and project over the periphery of the disk 102 by about 2-3mm. The upper portions of projections 106A, 106B may present, a substantially straight edge (when viewed from above) towards the disk 102 (as shown in Figures 16-20) or may have an angled form (as shown in Figures 21-24). Beneath these upper portions, each projection has substantially vertical face which engages the cylindrical edge face of the disk 102. The projections 106A, 106B are described in more detail below with reference to Figures 30-32.

The other end of the recess 101A is provided with projections 108A, 108B and 109A, 109B which are similar to projections 105A, 105B and 106A, 106B, respectively.

The manner in which disk 102 is removed from the position shown in Figures 1 and 6 will now be described with reference to Figures 17-20 and 22-24.

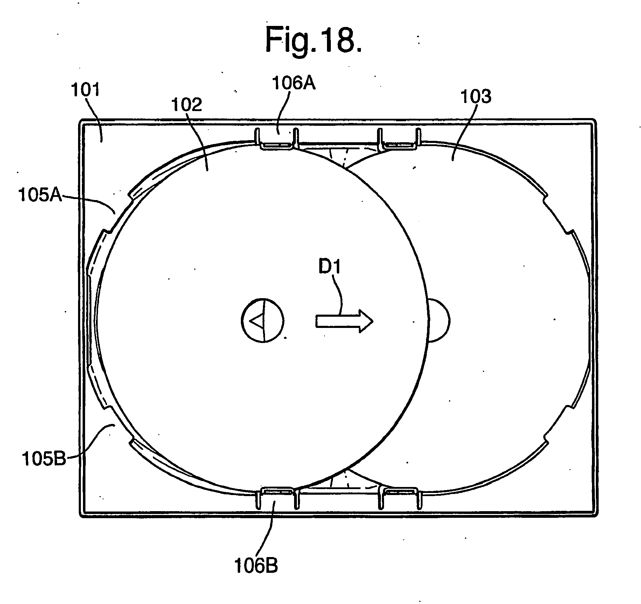

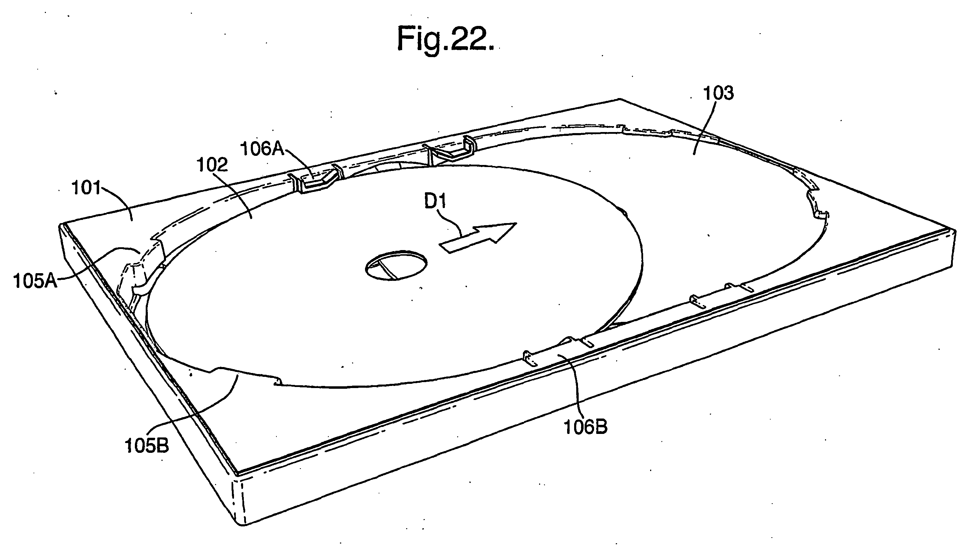

In order to remove disk 102 from the apparatus, it has to be slid sideways in the direction of arrow D1 in a direction substantially parallel to the plane of disk 102. Initially, it moves to the position shown in Figures 17 and 22 in which the periphery of the disk at its trailing edge slides out from beneath projections 105A and 105B. In this position it is still firmly retained against axial movement, in a direction substantially perpendicular to the plane of the disk 102, by its location beneath the projections 106A, 106B. Indeed, the degree of overlap between the projections 106A, 106B and the periphery of the disk increases as it moves from the position shown in Figure 2 to the position shown in Figure 18.

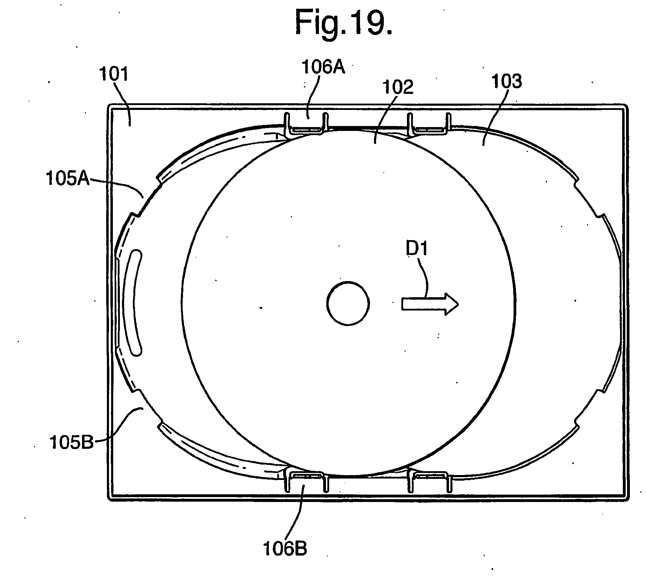

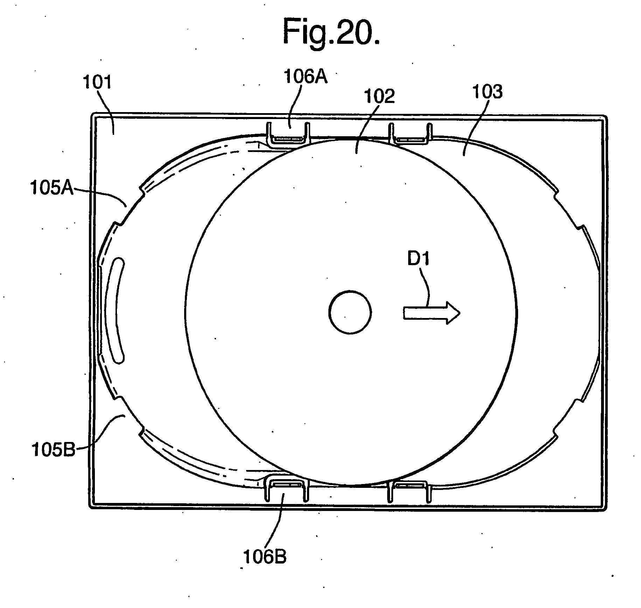

Figures 19 and 20 shows the disk 102 after it has been slid further in direction D1 and, as shown, the periphery of the disk 102 is still retained under projections 106A and 106B. Between the position shown in Figures 3 and 4, the diameter of the disk 102 passes between the projections 106A and 106B. Portions of the projections 106A and 106B are, however, spaced apart by a distance less than the diameter of the disk, typically by 1-3mm. Thus, in order for the diameter of the disk 102 to be able to pass between these positions two separate features are provided:
- first, the projections 106A and 106B are resiliently mounted so they an be flexed outwards whereby the space between portions of the projections 106A, 106B increases.
- secondly, the disk 102 may be flexed in a direction substantially perpendicular to the plane of the disk 102, towards (or away from) the tray 101. As the disk flexes, the edges of the disk engaging said portions of the projections 106A, 106B, are drawn inwards so as to effectively reduce the diameter of the disk. The disk 102 may be flexed by the user pressing it down (or pulling it upwards) with a finger and/or arise due to the inward pressure applied to the edges of the disk by the projections 106A, 106B at approximately diametrically opposed points and/or by the engagement with the ramps 110A, 110B (described further below).

By a combination of these two actions, it is possible to move the disk from the position shown in Figure 18 to that shown in Figure 19.

Preferably, both of these actions occur to facilitate sliding out of the disk although in some embodiments one of these actions may predominate. In other embodiments only one action may be present, i.e. sliding out of the disk may be achieved only by virtue of flexing of the disk or may be achieved only by virtue of flexing of the projections 106A, 106B.

If the disk 102 and/or the projections 106A, 106B are required to flex to enable the disk to be slid out, the overlap between the projections 106A, 106B and the disk can be increased, whereby the disk is retained in the tray 101 more securely.

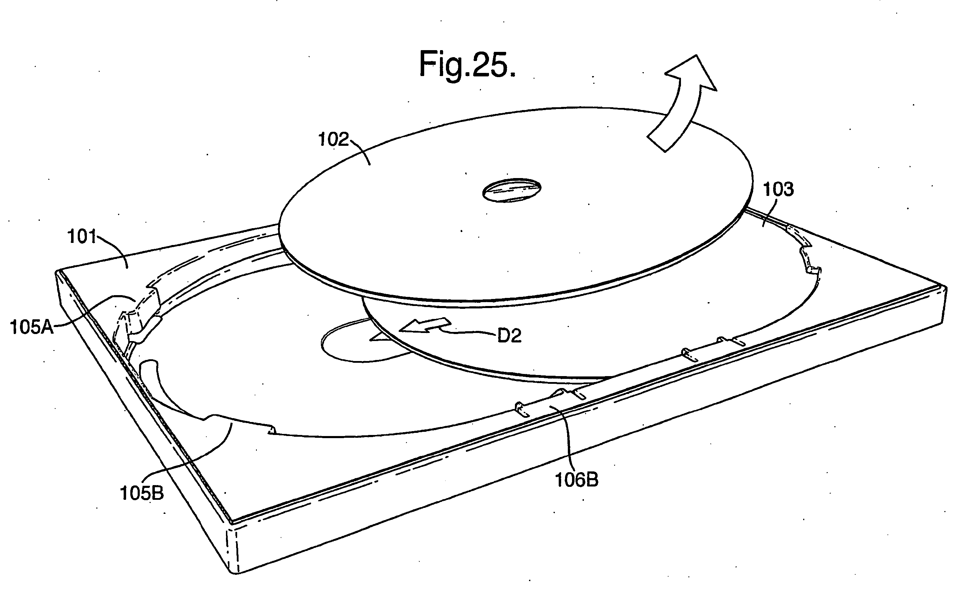

As the disk 102 moves from the position shown in Figure 18 to that shown in Figure 20, its edges slide up ramps 110A, 110B provided at the sides of the recess 101A adjacent the resilient projections 106A, 106B. The leading edge of the disk 102 is thus raised to assist the user in lifting the disk 102 away from the apparatus as shown in Figure 25. In addition, the ramps 110A, 110B ensure that the underside of the disk 102 is moved away from the other disk 103 so the recording surface of disk 102 is not damaged.

The arrangement thus simulates a pocket in that the disk has to be slid in a direction substantially parallel to its plane in order to remove it from the apparatus yet the disk is engaged only at its edges and is prevented from scraping against the base of the tray or the other disk held therein.

Removal of disk 102 and its interaction with projections 106A and 106B is described further below with reference to Figures 30-32.

Disk 102 can be re-installed into the tray 101 by sliding it back under projections 106A, 106B and projections 105A, 105B by a reverse of the sliding out process described above. However, the resilient projections 106A, 106B are arranged such that the disk 102 can, instead, be axially installed in the tray as their upper surfaces are chamfered so that if the disk 102 is located over the projections 106A, 106B and then pressed downwards towards the tray 101, the projections 106A, 106B flex downwards and outwards until they snap-back over the upper surface of the disk 102. The disk 102 can be located beneath the fixed projections 105A, 105B either before the disk is snapped passed the resilient projections 106A, 106B or after this.

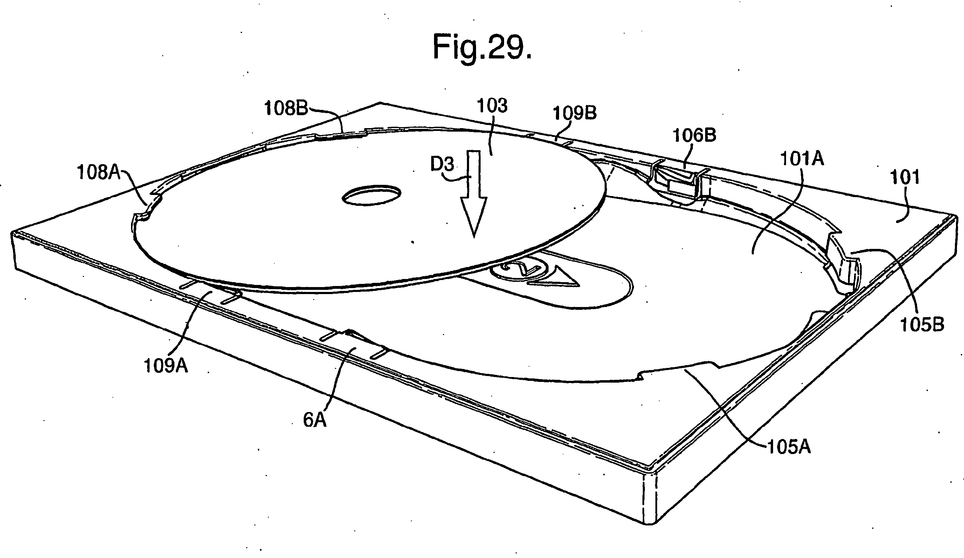

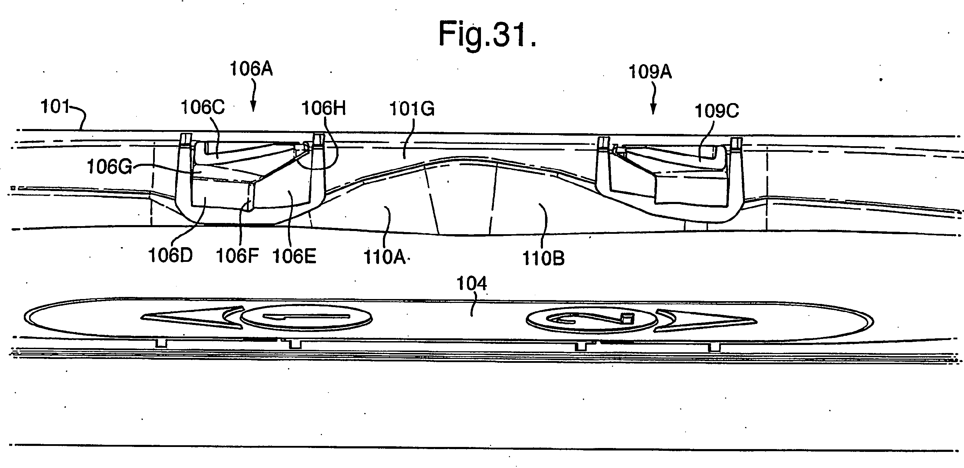

This is illustrated in Figure 29 which shows disk 103 being installed in this manner. Disk 103 is shown located under the projections 108A and 108B and the periphery of the disk 103 rests on top of the projections 109A, 109B. Disk 103 can then be pressed down in direction D103 whereupon the edges of disk 103 ride over chamfered surfaces provided on the inner edges of the top portions of the projections 109A, 109B causing the projections 109A, 109B and/or the disk 103 to flex until the disk is located beneath the overhanging portions of the projections 109A, 109B. The chamfered surface 109C of projection 9A is shown in Figures 30 and 31.

The apparatus is thus designed so that the disk 102 can be installed axially as this may be easier to do in a manufacturing process rather than the disk 102 having to be slid into position. In addition, if a user chooses to, or inadvertently installs the disk 102 axially, this can be done without damaging the resilient projections 106A, 106B (or the disk 102).

Once the disk 102 has been installed it is held in a relaxed state; i.e. without being subject to any flexing forces. However, the resilient nature of the projections 106A, 106B assists in urging and/or retaining the disk in the apparatus until a force sufficient to overcome this action and/or to flex the disk is applied to slide the disk out.

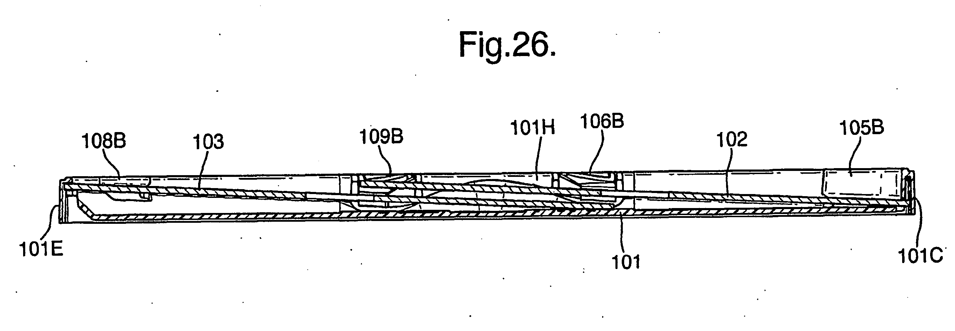

Once disk 102 has been removed, the other disk 103 can be slid out in direction D2 (see Figure 25). Disk 103 is slid out in an essentially similar manner to disk 102 but in the opposite direction. However, as the disks are held in a slightly inclined position (described below with reference to Figure 26-28), disk 103 moves through an arc as it is slid sideways. It first moves to an approximately level position and then its leading edge continues to move upwards as it is removed. This movement is assisted by the edges of the disk 103 moving up ramps 110C and 110D as the disk 103 is removed. The disk 103 and/or the resilient projections 109A, 109B flex to enable the disk 103 to slide out in this manner.

Figure 26 shows a sectional view taken on line A-A of Figure 16. This illustrates how the disks 102, 103 are held at an angle of approximately 1.5-5 degrees to the base of the tray 101 (approximately 2.5 degrees in the illustrated embodiment). The two disks are thus held at the same level, with the lower edge of each disk engaging the base of the tray 101 and the upper edge of each disk adjacent the upper, open side of the tray 101.

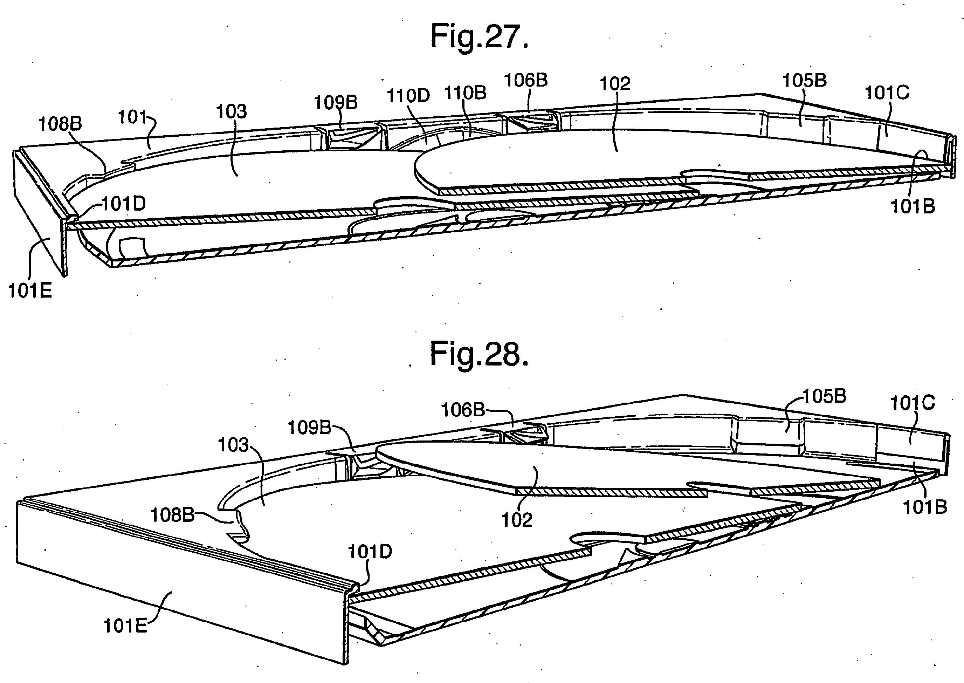

As shown most clearly in Figure 27, the lower edge of disk 102 is located in a slot 101B at the lower edge of end wall 101C of the tray 101 whereas the upper edge of disk 102 is located under a lip 101D at the upper edge of end wall 101E of the tray.

Figures 30 and 31 show enlarged views of the projections 106A and 109A and the ramps 110A, 110C therebetween. Projections 106B and 109B on the opposite side of the tray 101 are mirror images of projections 106A and 109A.

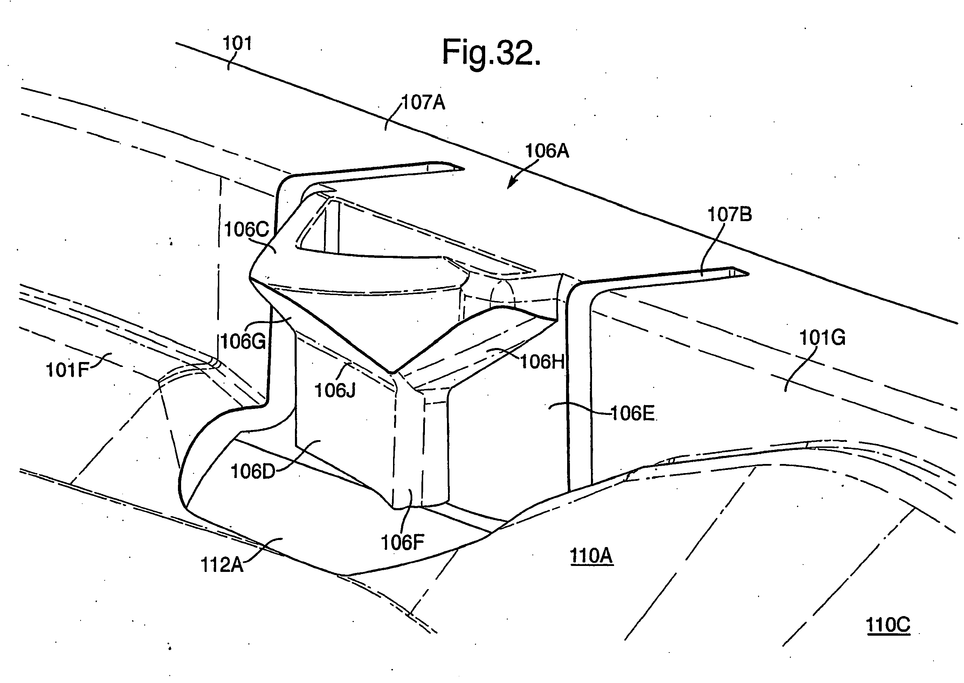

Figure 32 shows a further enlarged view of projection 106A. As will be seen from Figures 30 and 31, projections 106A and 109A are very similar although they are not exact mirror images of each other (small differences being required due to the slightly different movements of the disk 102 and 103 as they are slid out past the projections due to the inclination of the disks as shown in Figures 26 and 27).

Projection 106A has a chamfered upper surface 106C, the function of which is similar to that described above for chamfered surface 109C of projection 109A.

Projection 106A also has a substantially vertical curved surface 106D, which is located against and matches the curved periphery of disk 102 when held in the position shown in Figures 17 and 21. It also has a recessed portion 106E and a substantially vertical corner portion 106F between the curved surface 106D and the recessed portion 106E. A first overhanging portion 106G is provided above the curved surface 106D and a second overhanging portion 106H is provided above the recessed portion 106E.

As indicated above, when disk 102 is held in the apparatus, its periphery engages curved surface 106D and it is securely restrained against vertical movement, i.e. out of the tray 101, by the first overhanging portion 106G which it engages at the intersection 106J between the curved surface 106D and the first overhanging portion 106G. Whilst the disk 102 is held in a relaxed, unstressed state, any small movement in direction D1 results in flexure of the projection 106A so the disk 102 is urged back towards the retained position shown in Figures 17 and 21.

It will be seen that corner portion 106F projects into the recess 101A. Thus, the spacing between corner portion 106F and the corner portion of the opposite projecting portion 106B, is less than the diameter of disk 102. Thus, when the disk 102 is removed by sliding in direction D1 as described above, it is pinched between the corner portions of projections 106A and 106B. As described above, projections 106A, 106B and/or the disk 102 have to flex to allow the disk 102 to move in the direction D1 between these opposite corner portions. During this process, as disk 102 is pinched between the corner portions and lies beneath the overhanging portions 106G and/or 106H, it is firmly restrained against axial movement out of the tray 101.

As the disk 102 is slid out, its edges also ride up ramps 110A and 110B which cause the leading edge of the disk 102 to rise so providing further scope for flexing of the disk.

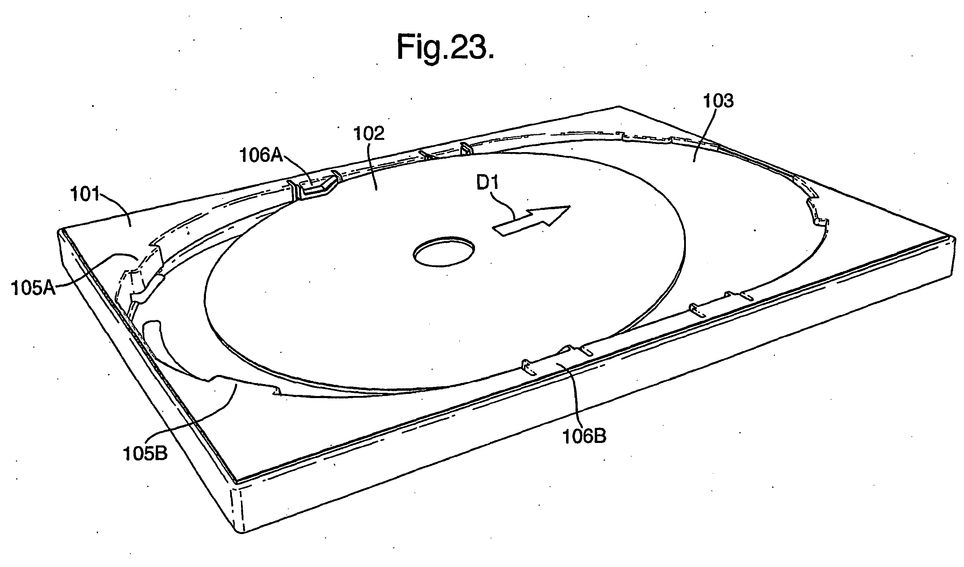

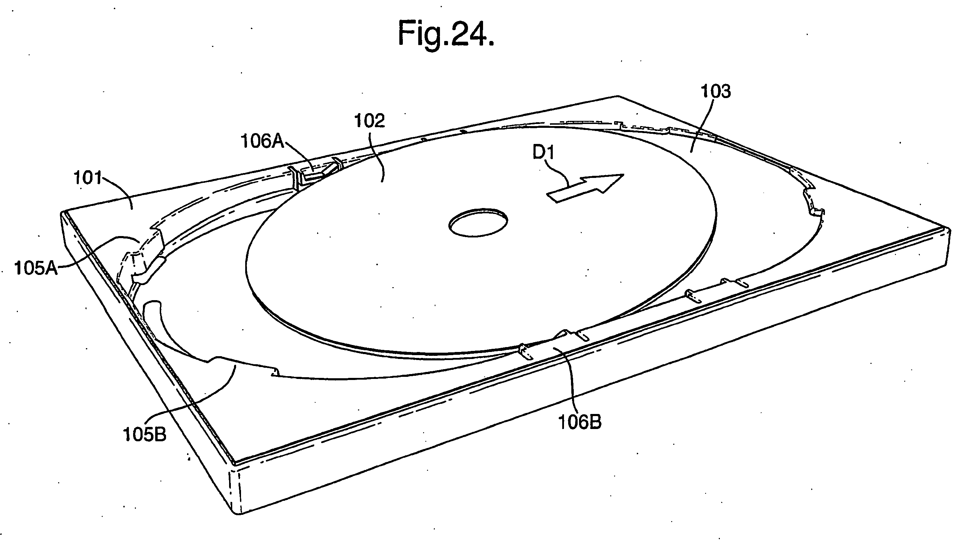

Eventually, when the disk 12 has been slid in direction D1 to the position shown in Figures 19 and 23, the carrier portions are no longer subject to outward pressure from the edges of the disk 102 and the edges of the disk lie within recessed portion 106E of projection 106A and the corresponding recessed portion of projection 106B. The disk is then slid further in direction D1 to the position shown in Figures 20 and 24 where it emerges from beneath the second overlapping portion 106H of projection 106A and the corresponding second overlapping portion of projection 106B so it is free to be lifted away from the tray as shown in Figure 25.

As indicated above, the tray is preferably formed of a plastics material, e.g. polystyrene. Most conveniently, this is formed by injection moulding. Apertures are therefore provided in the tray 101 as appropriate to facilitate the formation of particular features in the injection moulding process. In particular, apertures are provided beneath the fixed projections 105A, 105B, 108A and 108B (see aperture 112A beneath projection 105A in Figure 25) and apertures 112B, 112C, 112D and 112E (see Figure 16) beneath resilient projections 106A, 106B, 109A and 109B, respectively.

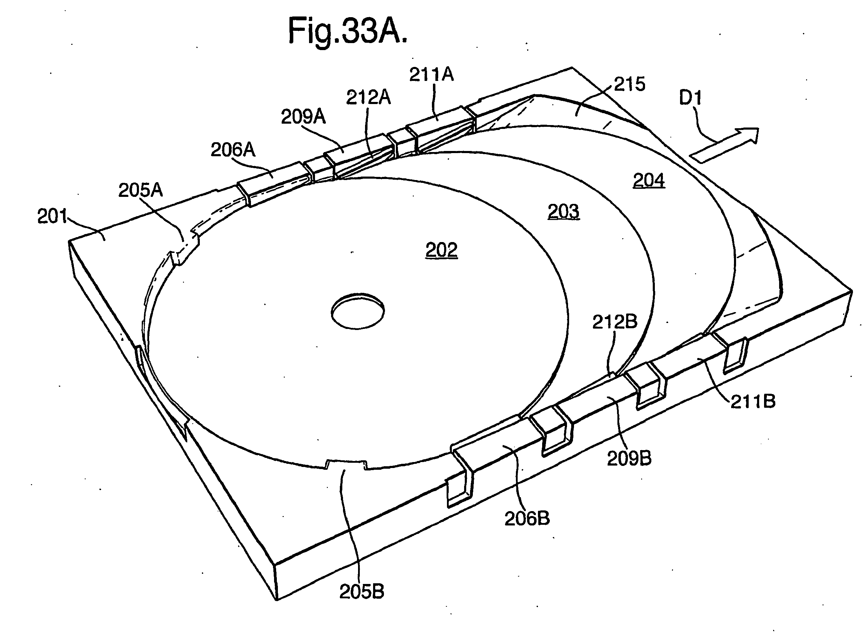

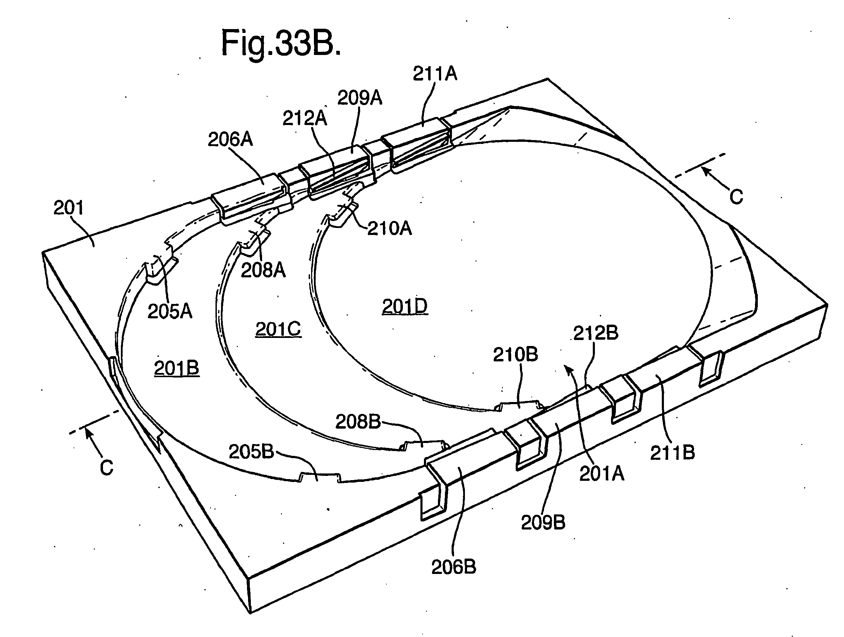

Figures 33-37 illustrate a fourth embodiment of the invention. This embodiment is somewhat similar to the third embodiment shown in Figs 18-32 but is designed to hold three disks and is arranged so that each disk slides in and out of the apparatus in the same direction (rather than in opposite directions as in the third embodiment).

Figure 33B shows apparatus comprising a holding portion in the form of a plastics tray 201 with an elongate recess 201A therein for receiving first, second and third disks 202, 203 and 204 (as shown in Figure 33A) in first, second and third areas 201B, 201C and 201D of the recess 201A, these areas partially overlapping so the disks received therein are also partially overlapping.

The width of the recess 201A between opposite sides 201G and 201H thereof is similar to (but just greater than) the diameter of the disks to be held therein.

The tray 201 is provided with a plurality of overlapping portions under which the periphery of the disks lie whilst the disks are held in the tray. Disk 202 is, for example, retained by a first pair of restraining portions or projections 205A, 205B and by a second pair of restraining portions or projections 206A, 206B. Corresponding pair of projections are provided for each of the other disks.

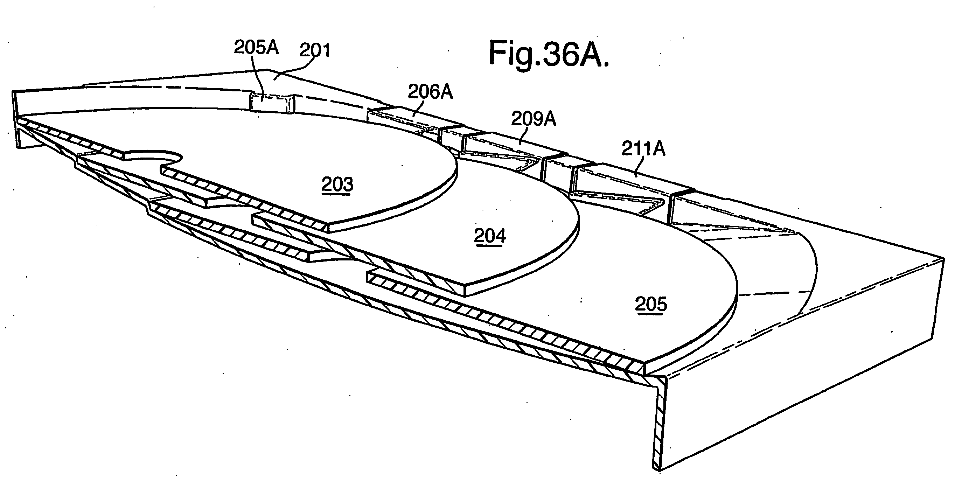

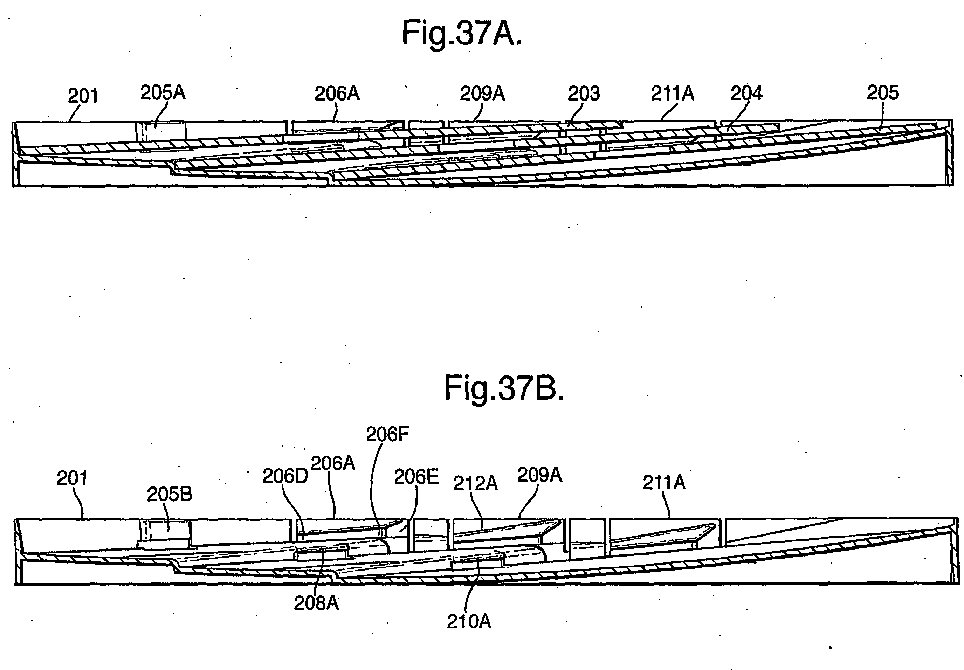

Each of the areas 201B, 201C and 201D has a curved or concave base such that the disks are supported therein only at their periphery (so the underside of the disk is held out of contact with the plastic tray 201) as is best shown in Figures 36A and 37A.

The first pair of projections 205A, 205B comprise substantially rigid portions of the tray 201 which project over the periphery of the disk 202. The projections 205A, 205B are angularly spaced from each other (relative to the centre of disk 202) by an angle of 120 degrees or less. In the illustrated embodiment, the angular spacing E is approximately 115 degrees. For apparatus designed to hold a CD or DVD, the projections 205A, 205B typically project over the periphery of the disk 202 by 2-3mm and each extend about 10-15mm around the periphery of the disk 202.

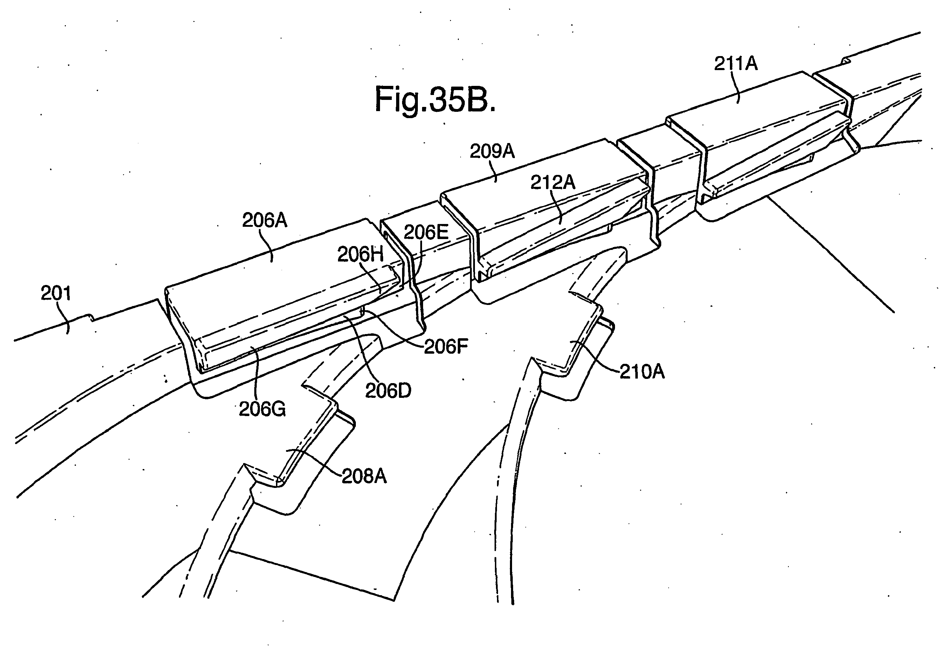

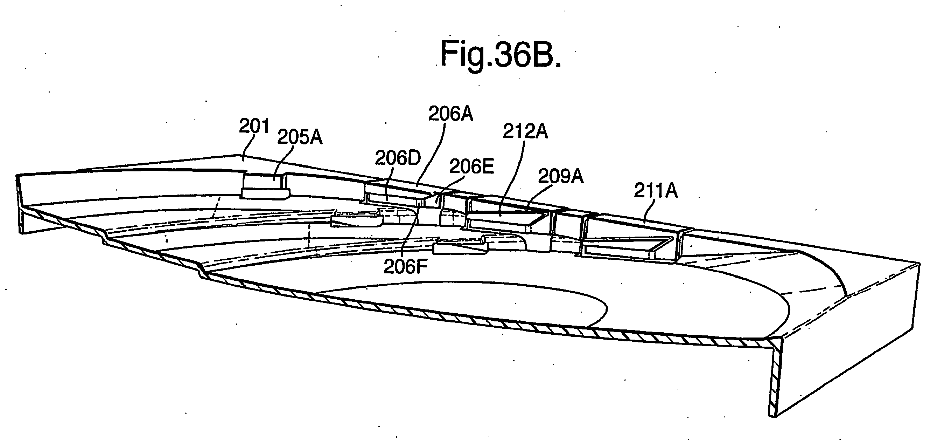

The second pair of projections 206A, 206B comprises resilient portions of the tray 201 which also project over the periphery of the disk 202. The projections 206A, 206B are angularly spaced from each other (relative to the centre of disk 202) by an angle slightly greater than 180 degrees. In the illustrated embodiment the angular spacing C is approximately 190 degrees. Slots 207A, 207B, 207C, 207D are provided in the tray 201 either side of the projections 206A, 206B to provide the projections with some resilience whereby the linear spacing between the projections 206A and 206B can be increased slightly, e.g. by 0.5-2mm. Each of the projections 206A, 206B may flex by virtue of a bowing outwards of the projection 206A and/or of that part of the tray 201 and/or by flexing of the projection downwards relative to the remainder of the tray 201. Each projection 206A, 206B may typically have a length of about 15-25mm (between the slots) and project over the periphery of the disk 202 by about 1-2mm. The projections 206A, 206B are described in more detail below with reference to Figures 35B and 36B.

The second disk 203 is similarly retained by a pair of fixed projections 208A and 208B provided in the base of the tray 201 and by a pair of resilient projections 209A and 209B as shown in Figure 33B. The third disk 204 is retained by a further pair of fixed projections 210A and 210B and a further pair of resilient projections 211A and 211B as shown in Figure 33B.

In order to remove disk 202 from the apparatus, it has to be slid sideways in the direction of arrow D1 (see Figure 33A) in a direction substantially parallel to the plane of disk 202. Initially, it moves to a position in which the periphery of the disk at its trailing edge slides out from beneath projections 205A and 205B. In this position it is still firmly retained against axial movement, in a direction substantially perpendicular to the plane of the disk 202, by its location beneath the projections 206A, 206B.

The disk 202 is then slid further in direction D1 with the periphery of the disk 202 still retained under projections 206A and 206B until the diameter of the disk 202 passes between the projections 206A and 206B. As the projections 206A and 206B are spaced apart by a distance less than the diameter of the disk, typically by 1-3mm; the projections 206A and 206B are flexed outwards whereby the space between the projections 206A, 206B increases to allow the diameter of the disk 202 to pass therebetween.

As the disk 202 is slid out its edges slide up ramps 212A, 212B provided on the next pair of resilient projections 209A, 209B. The leading edge of the disk 202 is thus raised to ensure that the underside of the disk 202 is moved away from the other disk 203 beneath it so the recording surface of disk 202 is not damaged and to assist the user in lifting the disk out of the apparatus.

The arrangement thus simulates a pocket in that the disk has to be slid in a direction substantially parallel to its plane in order to remove it from the apparatus. However, the disk is engaged only at its edges and is prevented from scraping against the base of the tray or another disk held therein.

Disk 202 can be re-installed into the tray 201 by sliding it back under projections 206A, 206B and projections 205A, 205B by a reverse of the sliding out process described above.

Once the disk 202 has been installed in the apparatus it is held in a relaxed state, i.e. without being subject to any flexing forces. However, the resilient nature of the projections 206A, 206B assists in urging and/or retaining the disk in the apparatus until a force sufficient to overcome this action and/or to flex the disk is applied to slide the disk out of the apparatus.

Once disk 202 has been removed, the second disk 203 can be slid out in the same direction. Disk 203 is slid out in an essentially similar manner to disk 202. The third disk 204 can then be slid out in the same direction in essentially the same manner. The leading edge of the third disk slides up ramp 215 provided at the end of the tray 201.

Figures 36A and 37A show sectional views taken on line A-A of Figure 33B. This illustrates how the disks are held at an angle of approximately 1.5-5 degrees to the base of the tray 201. In order to reduce further the depth of the tray 201, the disks are held at slightly different angles, disk 204 is held at an angle of approximately 5 degrees, disk 203 at a shallower angle of approximately 4 degrees and disk 202 at a yet shallower angle of approximately 3 degrees (as best shown in Figure 37A). In an alternative arrangement (not shown), the disks 202, 203, 204 may lie parallel to each other, e.g. all at an angle of approximately 5 degrees to the horizontal (although this would increase the depth of the tray 201).

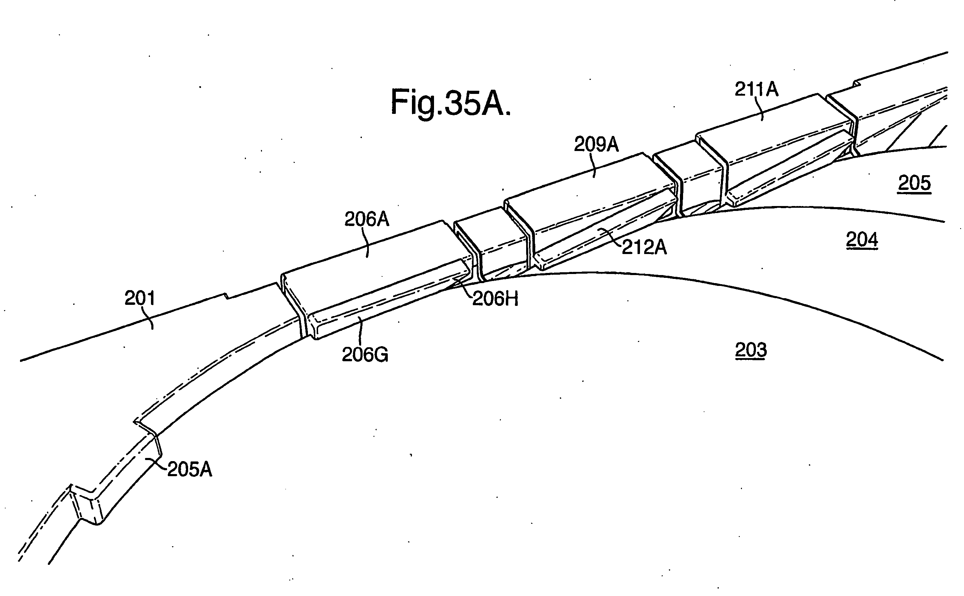

Figures 35A and 35B show enlarged views of the projections 206A, 209A and 211A. Projections 206B, 209B and 211B on the opposite side of the tray 201 are mirror images of projections 206A, 209A and 211A. Figures 36B and 37B also show features of these projections.

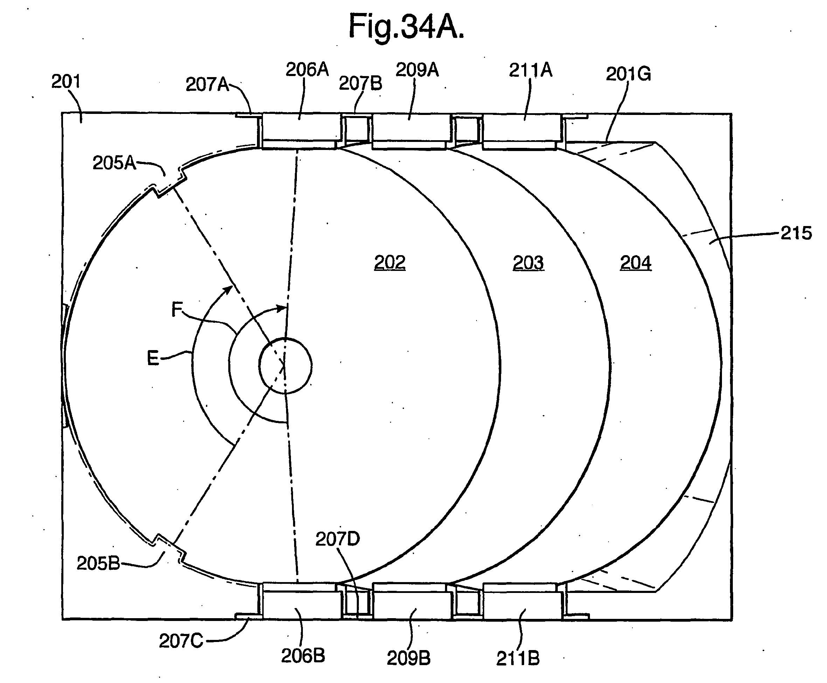

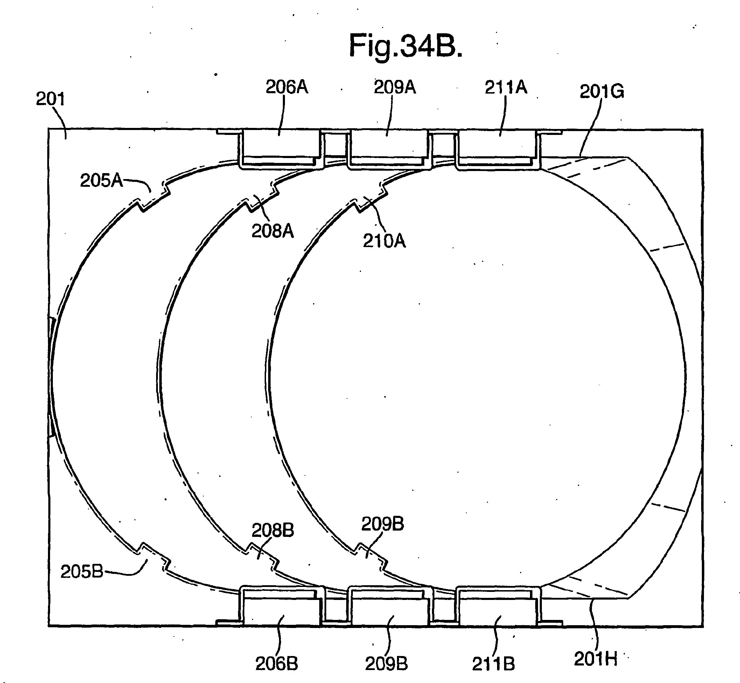

Projection 206A has a substantially vertical curved surface 206D, which is located against and matches the curved periphery of disk 202 when held in the position shown in Figures 33A and 34A. It also has a recessed portion 206E and a substantially vertical corner portion 206F between the curved surface 206D and the recessed portion 206E. A first overhanging portion 206G is provided above the curved surface 206D and a second overhanging portion 206H is provided above the recessed portion 206E.

As indicated above, when disk 202 is held in the apparatus, its periphery engages curved surface 206D and it is securely restrained against vertical movement, i.e. out of the tray 201, by the first overhanging portion 206G. The underside of overhanging portion 206G is substantially flat but is inclined at an angle so as to lie approximately parallel to the upper surface of disk 202. Whilst the disk 202 is held in a relaxed, unstressed state, many small movement in direction D1 results in flexure of the projection 206A so the disk 202 is urged back towards the retained position shown in Figures 33A and 34A.

The corner portion 206F projects into the recess 201A so the spacing between corner portion 206F and the corner portion of the opposite projecting portion 206B, is less than the diameter of disk 202. Thus, when the disk 202 is removed by sliding in direction D1 as described above, projections 206A and 206B have to flex to allow the disk 202 to move in the direction D1 between these opposite corner portions. During this process the disk still lies beneath the overhanging portions 206G and/or 206H, so it is firmly restrained against axial movement out of the tray 201.

As the disk 202 is slid out, its edges also ride up ramps 212A and 212B on the next pair of resilient projections 209A, 209B which cause the leading edge of the disk 202 to rise.

As the disk 202 is slid in direction D1 its diameter passes between the corner portions so the outward pressure on these from the edges of the disk 202 is reduced and the edges of the disk lie within recessed portion 206E of projection 206A and the corresponding recessed portion of projection 206B. The disk is then slid further in direction D1 so it emerges from beneath the second overlapping portion 206H of projection 206A and the corresponding second overlapping portion of projection 206B so it is free to be lifted away from the tray 201.

As indicated above, the tray is preferably formed of a plastics material, e.g. polystyrene. Most conveniently, this is formed by injection moulding. Apertures are provided in the tray 201 as appropriate to facilitate the formation of particular features in the injection moulding process. In particular, apertures are provided beneath the fixed projections 205A, 205B, etc. to facilitate formation of these features. The apparatus is preferably arranged so that it can be formed by a straight up and down two-part tool in an injection moulding process.

Whilst the embodiment described above holds three disks, a fewer or greater number of disks could be held in a similar manner.

As in the other embodiments described above, the apparatus is arranged so that each disk is supported only at its periphery and as it is slid out of the apparatus it slides up ramps so as to separate the underside of the disk further from the tray or disk beneath it. This helps reduce the risk of damaging the underside of the disk.

In the second, third and fourth embodiments, the disk is retained against axial movement by components overlapping the periphery of the disk and is retained against sliding movement by resilient members engaging the edge of the disk (and in the third and fourth embodiments, the same component provides these two functions). The resilient members are arranged to flex apart so as to permit the diameter of the disk to pass between them. Preferably, further sliding movement is then required before the disk can be lifted from the apparatus.

The illustrated embodiments show a tray which may be mounted to a cardboard cover. The tray may, however, be mounted within a plastic container or integrally formed with the base portion and/or lid portion of the container.

The tray may also be pivotably mounted within a container, e.g. as an extra leaf, or as one of a stack of trays. When pivotably mounted, the tray may be arranged to pivot about a line parallel to a spine portion joining the base portion and lid portion of a container or about a line perpendicular thereto. If a stack of trays is provided, they may be arranged to align with each other or may be arranged so that each tray only partially overlaps with the adjacent tray(s).

The apparatus described above provide a way of holding one or more disks, such as a CD or DVD, other than via its central aperture. Instead, the disk are held by features which simulate a pocket yet can be easily mass-produced, e.g. by injection moulding techniques, and which provide a robust container for one or more disks. The disk can be removed and installed in a manner in which it only engages the apparatus at its periphery so the recorded surface thereof is not subject to damage. In the preferred embodiments, the disk are securely held so as to be able to pass the industry 'drop test', i.e. the disk remain held even when the apparatus is subject to shock loads.

## Claims

1. Apparatus for holding a disk (102), the apparatus comprising a substantially rigid holding portion (101) having one or more overlapping portions (105A, 105B) which comprise one or more lips for overlapping the upper surface of the disk (102) and/or a slot (101B) for receiving a peripheral portion of the disk (102), the periphery of a disk (102) being receivable beneath the overlapping portions (105A, 105B) so as to inhibit removal of the disk (102) from the apparatus in a direction substantially perpendicular to the plane of the disk (102), the disk being disengageable from said overlapping portions (105A, 105B) by sliding the disk in a direction substantially parallel to the plane of the disk (102), the apparatus being **characterized by** a pair of restraining portions or projections (8A, 9; 106A, 106B) which are spaced apart by a distance less than the diameter of the disk (102), the arrangement being such that disengagement of the disk (102) from the overlapping portion, by sliding of the disk (102) in a direction substantially parallel to the plane of the disk (102) out from beneath staid overlapping portions (105A, 105B), requires the disk (102) to be flexed so as to disengage it from the restraining portions (106A, 106B) and/or requires one of the restraining portions (9) to be pivoted In a direction substantially perpendicular to the plane of the disk (102) away from an edge of the disk (102).

2. Apparatus as claimed in claim 1 In which the overlapping portions (105A, 105B) retain the disk (102) In the manner of a pocket.

3. Apparatus as claimed in claim 1 or 2 In which the arrangement Is such that the disk (102) has to be slid In a direction substantially parallel to the plane of the disk (102) by at least 5mm, preferably by at least 10mm, and most preferably by at least 20mm, before it is free to be lifted out of the apparatus.

4. Apparatus as claimed in any preceding claim in which the restraining portion comprises a locking device (9) pivotable between a closed and open postion which, in the closed position, prevents a disk (102) sliding out from beneath the overlapping portions (105A, 105B).

5. Apparatus as claimed in claim 4 in which the locking device (9) is pivotably mounted to the holding portion (101).

6. Apparatus as claimed in claim 4 or 5 in which the locking device (9) is arranged adjacent to the peripheral edge of a disk (102) so as to prevent the disk (102) sliding out from beneath the overlapping portions (105A, 105B) and overlies the periphery of the disk (102) to inhibit movement of the disk (102) in a direction substantially perpendicular to the plane of the disk (102).

7. Apparatus as claimed in any preceding claim having a ramp (110A, 110B) which an edge of the disk (102) slides up as the disk (102) slides out from beneath the overlapping portions (105A, 105B).

8. Apparatus as claimed in any preceding claim arranged such that disengagement of the disk (102) from said restraining portions or projections (106a, 106B) to permit sliding out of the disk (102) can be achieved predominantly, or only, by flexing of the disk (102).

9. Apparatus as claimed in any preceding claim arranged such that disengagement of the disk (102) from said restraining portions or projections (106a, 106B) to permit sliding out of the disk (102) also Involves flexing of said restraining portions or projections (106A, 106B).

10. Apparatus as claimed in any preceding claim in which the overlapping portions (105A, 105B) are arranged such that a disk (102) can be installed beneath the overlapping portions (105A, 105B) by moving It towards the apparatus in a direction substantially perpendicular to the plane of the disk (102) whereas disengagement of the disk (102) from the apparatus requires the disk (102) to be slid in a direction substantially parallel to the plane of the disk (102).

11. Apparatus as claimed in any preceding claim In which the holding portion (101) is in the form of a elastics tray.

12. Apparatus as claimed in any preceding claim arranged to hold two or more disks (102, 103), the disks (102, 103) partially overlapping each other.

13. Apparatus as claimed in any preceding claim in which the or each disk (102) is located within a recess (101A) and supported only at its periphery by a wall or ledge (101F) around the edge of the recess (101A).

14. Apparatus as claimed in any preceding claim in which the holding portion (101) may be mounted to a cardboard cover (2).

15. Apparatus as claimed in any of claims 1-13 in which the holding portion (101) is mounted within a container or integrally formed with the base portion and/or lid portion of a container.

## Patentansprüche

1. Vorrichtung zum Halten einer Scheibe (102), wobei die Vorrichtung einen im Wesentlichen starren Haltebereich (101) aufweist, mit einem oder mehreren Überlappungsbereichen (105A, 105B), die einen oder mehrere Lippen zum Überlappen der oberen Oberfläche der Scheibe (102) und/oder einen Schlitz (101B) zum Aufnehmen eines peripheren Bereichs der Scheibe (102) aufweisen, wobei die Peripherie einer Scheibe (102) unterhalb der Überlappungsbereiche (105A, 105B) aufnehmbar ist, um die Entfernung der Scheibe (102) aus der Vorrichtung in einer Richtung im Wesentlichen senkrecht zu der Ebene der Scheibe (102) zu verhindern, wobei die Scheibe von den Überlappungsbereichen (105A, 105B) durch Schieben der Scheibe in einer Richtung im Wesentlichen parallel zu der Ebenen der Scheibe (102) lösbar ist, wobei die Vorrichtung **gekennzeichnet ist durch** ein Paar von Rückhaltebereichen oder Überständen (8A, 9; 106A, 106B), die mittels einer Distanz, geringer als der Durchmesser der Scheibe (102), voneinander beabstandet sind, wobei die Anordnung so ist, dass die Lösbarkeit der Scheibe (102) von dem Überlappungsbereich **durch** Schieben der Scheibe (102) in einer Richtung im Wesentlichen parallel zu der Ebene der Scheibe (102) von unterhalb der Überlappungsbereiche (105A, 105B) es erfordert, dass die Scheibe (102) zu biegen ist, um sie von den Rückhaltebereichen (106A, 106B) zu lösen und/oder es erfordert, dass einer der Rückhaltebereiche (9) zu schwenken ist, in einer Richtung im Wesentlichen senkrecht zu der Ebene der Scheibe (102), weg von einem Rand der Scheibe (102).

2. Vorrichtung nach Anspruch 1, bei welcher die Überlappungsbereiche (105A, 105B) die Scheibe (102) in der Weise einer Tasche zurückhalten.

3. Vorrichtung nach Anspruch 1 oder 2, bei welcher die Anordnung so ist, dass die Scheibe (102) in einer Richtung im Wesentlichen parallel zu der Ebene der Scheibe (102) um mindestens 5 mm geschoben werden muss, bevorzugt um mindestens 10 mm, und äußerst bevorzugt um mindestens 20 mm, bevor sie frei ist, um sie aus der Vorrichtung zu heben.

4. Vorrichtung nach einem der vorhergehenden Ansprüche, bei welcher der Rückhaltebereich eine Verschlusseinrichtung (9) aufweist, die verschwenkbar zwischen einer geschlossenen und offenen Position ist, was in der geschlossenen Position die Scheibe (102) am Herausgleiten von unterhalb der Überlappungsbereiche (105A, 105B) hindert.

5. Vorrichtung nach Anspruch 4, bei welcher die Verschlusseinrichtung (9) schwenkbar an dem Haltebereich (101) befestigt ist.

6. Vorrichtung nach Anspruch 4 oder 5, bei welcher die Verschlusseinrichtung (9) neben dem peripheren Rand der Scheibe (102) angeordnet ist, um die Scheibe (102) am Herausgleiten von unterhalb der Überlappungsbereiche (105A, 105B) zu hindern und die Peripherie der Scheibe (102) überlagert, um das Bewegen der Scheibe (102) in einer Richtung im Wesentlichen senkrecht zu der Ebene der Scheibe (102) zu verhindern.

7. Vorrichtung nach einem der vorhergehenden Ansprüche, die eine Rampe (110A, 110B) aufweist, bei welcher ein Rand der Scheibe (102) nach oben gleitet, wenn die Scheibe (102) von unterhalb der Überlappungsbereiche (105A, 105B) herausgleitet.

8. Vorrichtung nach einem der vorhergehenden Ansprüche, die so angeordnet ist, dass ein Lösen der Scheibe (102) aus den Rückhaltebereichen oder Überständen (106A, 106B), um ein Herausgleiten der Scheibe (102) zu ermöglichen, ohne weiteres erreicht werden kann, oder lediglich durch Biegen der Scheibe (102).

9. Vorrichtung nach einem der vorhergehenden Ansprüche, die so angeordnet ist, dass ein Lösen der Scheibe (102) aus den Rückhaltebereichen oder Überständen (106A, 106B), um ein Herausgleiten der Scheibe (102) zu ermöglichen, auch das Biegen der Rückhaltebereiche oder Überstände (106A, 106B) umfasst.

10. Vorrichtung nach einem der vorhergehenden Ansprüche, bei welcher die Überlappungsbereiche (105A, 105B) so angeordnet sind, dass eine Scheibe (102) unterhalb der Überlappungsbereiche (105A, 105B) eingebracht werden kann durch Bewegen derselben hin zu der Vorrichtung in einer Richtung im Wesentlichen senkrecht zu der Ebene der Scheibe (102), wohingegen es das Lösen der Scheibe (102) von der Vorrichtung erfordert, dass die Scheibe (102) in einer Richtung im Wesentlichen parallel zu der Ebene der Scheibe (102) zu schieben ist.

11. Vorrichtung nach einem der vorhergehenden Ansprüche, bei welcher der Haltebereich (101) in Form einer Kunststoffablage vorgesehen ist.

12. Vorrichtung nach einem der vorhergehenden Ansprüche, die angeordnet ist, um zwei oder mehrere Scheiben (102, 103) zu halten, wobei die Scheiben (102, 103) sich teilweise überlappen.

13. Vorrichtung nach einem der vorhergehenden Ansprüche, bei welcher die oder jede Scheibe (102) in einer Aussparung (101A) angeordnet ist und nur an ihrer Peripherie durch eine Wand oder Leiste (101F) rund um die Kante der Aussparung (101A) gestützt ist.

14. Vorrichtung nach einem der vorhergehenden Ansprüche, bei welcher der Haltebereich (101) an einer Kartonabdeckung (2) befestigt sein kann.

15. Vorrichtung nach einem der Ansprüche 1 - 13, bei welcher der Haltebereich (101) in einem Behältnis befestigt ist oder integral mit dem Basisbereich und/oder einem Deckelbereich eines Behältnisses ausgebildet ist.

## Revendications

1. l'Appareil, pour soutenir un disque (102), l'appareil comprend une partie de rétention considérablement rigide (101) qui a une ou quelques parties de superposition (105A, 105B) qui comprennent un ou quelques bords pour superposer la surface supérieure du disque (102) et/ou une rainure (101B) pour recevoir une partie périphérique du disque (102), la périphérie d'un disque (102) en étant admissible au-dessous des parties de superposition (105A, 105B) pour empêcher la retirée du disque (102) de l'appareil dans une direction substantiellement perpendiculaire au plan du disque (102), en étant le disque extraible des dites parties de superposition (105A, 105B) en glissant le disque dans une direction considérablement parallèle au plan du disque (102), l'appareil est **caractérisé par** une paire de parties de rétention ou de projections (8A, 9; 106A, 106B) qui sont espacés par une distance moindre que le diamètre du disque (102), la disposition en étant tel que la retirée du disque (102) de la partie de superposition, en glissant le disque (102) dans une direction considérablement parallèle au plan du disque (102) du dehors des dites parties de superposition (105A 105B), requiert que le disque (102) soit flexioné pour le retirer des parties de restriction (106A, 106B) et/ou requiert que l'une des parties de restriction (9) pivote dans une direction considérablement perpendiculaire au plan du disque (102) en s'éloignant d'un bord ou le disque (102).

2. l'Appareil comme il est revendiqué dans la revendication 1 dans lequel les parties de superposition (105A, 105B) retiennent le disque (102) en forme d'une poche.

3. l'Appareil comme il est revendiqué dans la revendication 1 ou 2 dans lequel l'ajustage est tellement que le disque (102) doit être glissé dans une direction substantiellement parallèle au plan du disque (102) au moins 5mm, préférablement au moins 10mm, et plus préférablement au moins 20mm, avant qu'il ne soit libre d'être tiré outre l'appareil.

4. l'Appareil comme il est revendiqué dans n'importe laquelle des revendications précédentes dans lequel la partie de rétention comprend un dispositif de fermeture (9) tournant entre une position fermée et ouverte qui, dans une position fermée, il évite qu'un disque (102) soit glissé au-dessous des parties de superposition (105A, 105B).

5. l'Appareil comme il est revendiqué dans la revendication 4 dans lequel le dispositif de fermeture (9) est monté d'une forme tournante à la partie de rétention (101).

6. l'Appareil comme il est revendiqué dans la revendication 4 ou 5 dans lequel le dispositif de fermeture (9) est disposé adjacent au bord périphérique d'un disque (102) pour éviter que le disque (102) soit glissé au-dessous des parties superposées (105A, 105B) et recouvre la périphérie du disque (102) pour empêcher le mouvement du disque (102) dans une direction considérablement perpendiculaire au plan du disque (102).

7. l'Appareil comme il est revendiqué dans n'importe laquelle des revendications précédentes qui a une rampe (110A, 110B) avec un bord du disque (102) qui est glissé vers le haut quand le disque (102) est glissé dehors au-dessous des parties de superposition (105A, 105B).

8. l'Appareil comme il est revendiqué dans n'importe laquelle des revendications précédentes disposé tellement que la retirée du disque (102) des dites projections ou de parties de restriction (106A, 106B) pour permettre que le disque soit glissé dehors (102) il peut prédominamment être atteint, ou uniquement, en doublant le disque (102).

9. l'Appareil comme il est revendiqué dans n'importe laquelle des revendications précédentes disposé tellement que la retirée du disque (102) des dites projections ou de parties de restriction (106a, 106B) pour permettre le glissement vers outre le disque (102) inclut aussi le pliage des dites projections ou parties de restriction (106A, 106B).

10. l'Appareil comme il est revendiqué dans n'importe laquelle des revendications précédentes dans lequel les parties de superposition (105A, 105B) sont disposées tellement qu'un disque (102) peut être installé au-dessous des parties de superposition (105A, 105B) en le mouvant vers l'appareil dans une direction considérablement perpendiculaire au plan du disque (102) en attendant qu'où la retirée du disque (102) de l'appareil requiert que l'on glisse le disque (102) dans une direction considérablement parallèle au plan du disque (102).

11. l'Appareil comme il est revendiqué dans n'importe laquelle des revendications précédentes dans lequel la partie de rétention (101) est en forme d'un plateau de plastique.

12. l'Appareil comme il est revendiqué dans n'importe laquelle des revendications précédentes disposé pour soutenir deux ou plus disques (102, 103), les disques (102, 103) partiellement superposé un sur l'autre.

13. l'Appareil comme il est revendiqué dans l'une des revendications précédentes dans lequel chaque disque (102) est localisé à l'intérieur d'un creux (101 A) et appuyé seulement sur sa périphérie par un mur ou une console (101 F) autour du bord du creux (101A).

14. l'Appareil comme il est revendiqué dans n'importe laquelle des revendications précédentes dans lequel la partie de rétention (101) peut être montée dans une couverture en carton (2).

15. l'Appareil comme il est revendiqué dans n'importe laquelle des revendications 1 à 13 dans lequel la partie de rétention (101) est montée à l'intérieur d'un container ou totalement formée avec la partie de base et/ou la partie de couvercle d'un container.
